# EUROPEAN PATENT APPLICATION

(11) **EP 4 618 609 A1**
(43) Date of publication of application: **17.09.2025**
(21) Application number: 23887933.2
(22) Date of filing: 06.11.2023
(51) Int. Cl.: H04W 24/02

(54) **MODEL MONITORING METHOD AND APPARATUS, TERMINAL, AND NETWORK SIDE DEVICE**

(30) Priority: 07.11.2022 CN 202211387247
(71) Applicant: Datang Mobile Communications Equipment Co., Ltd., Beijing 100085 (CN)
(72) Inventor: MIAO, Jinhua, Beijing 100085 (CN); ZENG, Erlin, Beijing 100085 (CN); WANG, Da, Beijing 100085 (CN)
(74) Representative: Studio Torta S.p.A.
(86) International application number: PCT/CN2023/129833
(87) International publication number: WO 2024/099243

(57) **Abstract**

The present disclosure provides a model monitoring method and apparatus, a terminal and a network side device. The method includes: the terminal receives monitoring configuration information sent by the network side device; the terminal monitors a target model according to the monitoring configuration information to obtain a monitoring result; wherein the target model includes: artificial intelligence (AI) model and/or machine learning (ML) model.

## Description

### CROSS-REFERENCE TO RELATED APPLICATION

This application claims priority to the Chinese patent application No. 202211387247.4 filed with the CNIPA on November 7, 2022, and titled "model monitoring method and apparatus, terminal and network side device", disclosure of which is incorporated herein by reference in its entirety.

### TECHNICAL FIELD

The present disclosure relates to the field of communication technology, and in particular to a model monitoring method and apparatus, a terminal and a network side device.

### BACKGROUND

In the process of wireless communication, the application of artificial intelligence (AI) models/machine learning (ML) models is limited to implementationbased approaches. In order to expand the scope of application of AI/ML, it is necessary to discuss issues such as how to manage AI models/ML models. Generally, three AI/ML models are defined: beam management (BM), channel state information (CSI) compression, and positioning accuracy enhancement. In the actual communication process, other beams can be derived through the calculation of the AI module according to these models, thereby reducing the power consumption of the measurement process of terminals. However, the accuracy of the AI/ML model may decrease during usage, resulting in inaccurate AI/ML model results, and affecting system performance, e.g., causing decreased throughput, increased beam failure recovery (BFR), increased latency and the like.

### SUMMARY

The present disclosure is to provide a model monitoring method and apparatus, a terminal and a network side device, to solve the problem that the accuracy of AI/ML models decreases during usage, affecting system performance.

An embodiment according to the present disclosure provides a model monitoring method, including:
receiving, by a terminal, monitoring configuration information sent by a network side device;
monitoring, by the terminal, a target model according to the monitoring configuration information to obtain a monitoring result;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the monitoring the target model according to the monitoring configuration information to obtain the monitoring result includes:
monitoring the target model according to a monitoring mode indicated by the monitoring configuration information to determine an accuracy of the target model;
wherein the monitoring mode includes one of the following:
   periodic monitoring; and
   monitoring within a first time window.

In some embodiments, the monitoring the target model according to a monitoring mode indicated by the monitoring configuration information to determine an accuracy of the target model includes:
measuring one or more measurement objects according to the monitoring mode indicated by the monitoring configuration information to obtain measurement results of all the measurement objects;
determining, according to the measurement results, K measurement objects whose signal quality is greater than a first threshold;
comparing the K measurement objects with a measurement object corresponding to a result derived from the target model to determine the accuracy of the target model;
wherein K is an integer greater than or equal to 1.

In some embodiments, the comparing the K measurement objects with a measurement object corresponding to a result derived from the target model to determine the accuracy of the target model includes:
in a case that a first target object with the highest signal quality among the K measurement objects is different from a second target object with the highest signal quality indicated by the result derived from the target model, determining that the target model is inaccurate; otherwise, determining that the target model is accurate;
   or,
determining a quantity of measurement objects shared by the K measurement objects and M measurement objects corresponding to the result derived from the target model, and in a case that the quantity of the shared measurement objects is less than a second threshold, determining that the target model is inaccurate; otherwise, determining that the target model is accurate;
wherein, M is an integer greater than or equal to 1, and M and K are equal or different.

In some embodiments, the monitoring the target model according to a monitoring mode indicated by the monitoring configuration information to determine an accuracy of the target model includes:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate; otherwise, determining that the target model is accurate;
   or,
in a case that a quantity of measurement objects for which the first measurement result does not match the result derived from the target model is greater than a third threshold, determining that the target model is inaccurate; otherwise, determining that the target model is accurate;
wherein N is an integer greater than or equal to 1.

In some embodiments, the monitoring the target model according to the monitoring configuration information to obtain the monitoring result includes:
monitoring, according to the monitoring configuration information, a beam reference signal received power (RSRP) indicated by the result derived from the target model to determine an accuracy of the target model.

In some embodiments, the monitoring, according to the monitoring configuration information, the beam RSRP indicated by the result derived from the target model to determine an accuracy of the target model includes:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; otherwise, determining that the target model is accurate;
wherein, the fourth threshold is an RSRP difference threshold corresponding to the first target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
reference signal received quality (RSRQ);
received signal strength indication (RSSI);
signal-to-noise and interference ratio (SINR);
beam;
pilot signal; or
positioning result.

In some embodiments, after obtaining the monitoring result, the method further includes:
in a case that the monitoring result indicates that the target model is inaccurate, switching to other model than the target model;
wherein, the other model includes one of the following:
   other AI model than the target model;
   other ML model than the target model;
   a non-AI model;
   a non-ML model.

In some embodiments, after obtaining the monitoring result, the method further includes:
receiving first indication information sent by the network side device;
deactivating the target model according to the first indication information; and/or switching to other model than the target model according to the first indication information.

In some embodiments, the method further includes:
sending the monitoring result to the network side device.

In some embodiments, the sending the monitoring result to the network side device includes at least one of the following:
sending the monitoring result to the network side device according to a monitoring result reporting periodicity indicated by the monitoring configuration information;
sending the monitoring result to the network side device within a time window for reporting the monitoring result that is indicated by the monitoring configuration information; or
sending the monitoring result to the network side device in a case that the monitoring result indicates that the target model is inaccurate.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

An embodiment according to the present disclosure provides a model monitoring method, including:
sending, by a network side device, monitoring configuration information for monitoring a target model to a terminal;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the method further includes:
receiving a monitoring result sent by the terminal;
determining an accuracy of the target model according to the monitoring result.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

In some embodiments, after receiving the monitoring result, the method further includes:
in a case that the monitoring result indicates that the target model is inaccurate, sending first indication information to the terminal; wherein the first indication information is used for instructing the terminal to deactivate the target model and/or switch to other model than the target model.

An embodiment according to the present disclosure provides a model monitoring method, including:
sending, by a network side device, measurement configuration information to a terminal;
receiving, by the network side device, a measurement result sent by the terminal;
monitoring, by the network side device, a target model according to the measurement result to obtain a monitoring result;
wherein, the target model includes: an AI model and/or an ML model.

In some embodiments, the measurement configuration information includes at least one of the following:
identification information of a measurement object;
measurement time information of the measurement object;
measurement periodicity of the measurement object; or
measurement window for the measurement object.

In some embodiments, the monitoring the target model according to the measurement result to obtain the monitoring result includes:
determining, according to the measurement result, X measurement objects whose signal quality is greater than a fifth threshold;
comparing the X measurement objects with a measurement object corresponding to a result derived from the target model to determine an accuracy of the target model;
wherein X is an integer greater than or equal to 1.

In some embodiments, the comparing the X measurement objects with the measurement object corresponding to the result derived from the target model to determine the accuracy of the target model includes:
in a case that a third target object with the highest signal quality among the X measurement objects is different from a fourth target object with the highest signal quality indicated by the result derived from the target model, determining that the target model is inaccurate; otherwise, determining that the target model is accurate;
   or,
determining a quantity of measurement objects shared by the X measurement objects and Y measurement objects corresponding to the result derived from the target model, and in a case that the quantity of the shared measurement objects is less than a sixth threshold, determining that the target model is inaccurate; otherwise, determining that the target model is accurate;
wherein, Y is an integer greater than or equal to 1, and X and Y are equal or different.

In some embodiments, the monitoring the target model according to the measurement result to obtain the monitoring result includes:
in a case that Z consecutive measurement results do not match the result derived from the target model, determining that the target model is inaccurate; otherwise, determining that the target model is accurate;
   or,
in a case that a quantity of measurement objects for which the measurement result does not match the result derived from the target model is greater than a seventh threshold, determining that the target model is inaccurate; otherwise, determining that the target model is accurate;
wherein Z is an integer greater than or equal to 1.

In some embodiments, the monitoring the target model according to the measurement result to obtain the monitoring result includes:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; otherwise, determining that the target model is accurate;
wherein, the eighth threshold is an RSRP difference threshold corresponding to the second target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, after obtaining the monitoring result, the method further includes:
in a case that the monitoring result indicates that the target model is inaccurate, deactivating the target model, and/or switching to other model than the target model;
wherein, the other model includes one of the following:
   other AI model than the target model;
   other ML model than the target model;
   a non-AI model;
   a non-ML model.

An embodiment according to the present disclosure provides a model monitoring method, including:
receiving, by a terminal, measurement configuration information sent by a network side device;
measuring, by the terminal, a measurement object according to the measurement configuration information to obtain a measurement result;
sending, by the terminal, the measurement result to the network side device.

In some embodiments, the measurement configuration information includes at least one of the following:
identification information of a measurement object;
measurement time information of the measurement object;
measurement periodicity of the measurement object; or
measurement window for the measurement object.

In some embodiments, the measuring the measurement object according to the measurement configuration information to obtain the measurement result includes at least one of the following:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain an RSRP of the beam.

In some embodiments, the measurement object includes at least one of the following:
RSRP;
RSRQ;
RSSI;
SINR;
beam;
pilot signal; or
positioning result.

An embodiment according to the present disclosure provides a terminal, including: a memory, a transceiver, and a processor, wherein the memory is used for storing a computer program, the transceiver is used for receiving and sending data under the control of the processor, and the processor is used for reading the computer program in the memory and performing the following steps:
receiving monitoring configuration information sent by a network side device;
monitoring a target model according to the monitoring configuration information to obtain a monitoring result;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the processor is used for reading the computer program in the memory and performing the following step:
monitoring the target model according to a monitoring mode indicated by the monitoring configuration information to determine an accuracy of the target model;
wherein the monitoring mode includes one of the following:
   periodic monitoring; and
   monitoring within a first time window.

In some embodiments, the processor is used for reading the computer program in the memory and performing the following steps:
measuring one or more measurement objects according to the monitoring mode indicated by the monitoring configuration information to obtain measurement results of all the measurement objects;
determining, according to the measurement results, K measurement objects whose signal quality is greater than a first threshold;
comparing the K measurement objects with a measurement object corresponding to a result derived from the target model to determine the accuracy of the target model;
wherein K is an integer greater than or equal to 1.

In some embodiments, the processor is used for reading the computer program in the memory and performing the following steps:
in a case that a first target object with the highest signal quality among the K measurement objects is different from a second target object with the highest signal quality indicated by the result derived from the target model, determining that the target model is inaccurate; otherwise, determining that the target model is accurate;
   or,
determining a quantity of measurement objects shared by the K measurement objects and M measurement objects corresponding to the result derived from the target model, and in a case that the quantity of the shared measurement objects is less than a second threshold, determining that the target model is inaccurate; otherwise, determining that the target model is accurate;
wherein, M is an integer greater than or equal to 1, and M and K are equal or different.

In some embodiments, the processor is used for reading the computer program in the memory and performing the following steps:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate; otherwise, determining that the target model is accurate;
   or,
in a case that a quantity of measurement objects for which the first measurement result does not match the result derived from the target model is greater than a third threshold, determining that the target model is inaccurate; otherwise, determining that the target model is accurate;
wherein N is an integer greater than or equal to 1.

In some embodiments, the processor is used for reading the computer program in the memory and performing the following steps:
monitoring, according to the monitoring configuration information, a beam reference signal received power (RSRP) indicated by the result derived from the target model to determine an accuracy of the target model.

In some embodiments, the processor is used for reading the computer program in the memory and performing the following steps:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; otherwise, determining that the target model is accurate;
wherein, the fourth threshold is an RSRP difference threshold corresponding to the first target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the processor is used for reading the computer program in the memory and performing the following steps:
in a case that the monitoring result indicates that the target model is inaccurate, switching to other model than the target model;
wherein, the other model includes one of the following:
   other AI model than the target model;
   other ML model than the target model;
   a non-AI model;
   a non-ML model.

In some embodiments, the processor is used for reading the computer program in the memory and performing the following steps:
receiving first indication information sent by the network side device;
deactivating the target model according to the first indication information; and/or switching to other model than the target model according to the first indication information.

In some embodiments, the processor is used for reading the computer program in the memory and performing the following step:
sending the monitoring result to the network side device.

In some embodiments, the processor is used for reading the computer program in the memory and performing at least one of the following steps:
sending the monitoring result to the network side device according to a monitoring result reporting periodicity indicated by the monitoring configuration information;
sending the monitoring result to the network side device within a time window for reporting the monitoring result that is indicated by the monitoring configuration information; or
sending the monitoring result to the network side device in a case that the monitoring result indicates that the target model is inaccurate.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

An embodiment according to the present disclosure provides a network side device, including: a memory, a transceiver, and a processor, wherein the memory is used for storing a computer program, the transceiver is used for receiving and sending data under the control of the processor, and the processor is used for reading the computer program in the memory and performing the following step:
sending monitoring configuration information for monitoring a target model to the terminal;
wherein, the target model includes: an AI model and/or an ML model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the processor is used for reading the computer program in the memory and performing the following steps:
receiving a monitoring result sent by the terminal;
determining an accuracy of the target model according to the monitoring result.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

In some embodiments, the processor is used for reading the computer program in the memory and performing the following step:
in a case that the monitoring result indicates that the target model is inaccurate, sending first indication information to the terminal; wherein the first indication information is used for instructing the terminal to deactivate the target model and/or switch to other model than the target model.

An embodiment according to the present disclosure provides a network side device, including: a memory, a transceiver, and a processor, wherein the memory is used for storing a computer program, the transceiver is used for receiving and sending data under the control of the processor, and the processor is used for reading the computer program in the memory and performing the following steps:
sending measurement configuration information to the terminal;
receiving a measurement result sent by the terminal;
monitoring a target model according to the measurement result to obtain a monitoring result;
wherein, the target model includes: an AI model and/or an ML model.

In some embodiments, the measurement configuration information includes at least one of the following:
identification information of a measurement object;
measurement time information of the measurement object;
measurement periodicity of the measurement object; or
measurement window for the measurement object.

In some embodiments, the processor is used for reading the computer program in the memory and performing the following steps:
determining, according to the measurement result, X measurement objects whose signal quality is greater than a fifth threshold;
comparing the X measurement objects with a measurement object corresponding to a result derived from the target model to determine an accuracy of the target model;
wherein X is an integer greater than or equal to 1.

In some embodiments, the processor is used for reading the computer program in the memory and performing the following steps:
in a case that a third target object with the highest signal quality among the X measurement objects is different from a fourth target object with the highest signal quality indicated by the result derived from the target model, determining that the target model is inaccurate; otherwise, determining that the target model is accurate;
   or,
determining a quantity of measurement objects shared by the X measurement objects and Y measurement objects corresponding to the result derived from the target model, and in a case that the quantity of the shared measurement objects is less than a sixth threshold, determining that the target model is inaccurate; otherwise, determining that the target model is accurate;
wherein, Y is an integer greater than or equal to 1, and X and Y are equal or different.

In some embodiments, the processor is used for reading the computer program in the memory and performing the following steps:
in a case that Z consecutive measurement results do not match the result derived from the target model, determining that the target model is inaccurate; otherwise, determining that the target model is accurate;
   or,
in a case that a quantity of measurement objects for which the measurement result does not match the result derived from the target model is greater than a seventh threshold, determining that the target model is inaccurate; otherwise, determining that the target model is accurate;
wherein Z is an integer greater than or equal to 1.

In some embodiments, the processor is used for reading the computer program in the memory and performing the following steps:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; otherwise, determining that the target model is accurate;
wherein, the eighth threshold is an RSRP difference threshold corresponding to the second target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the processor is used for reading the computer program in the memory and performing the following steps:
in a case that the monitoring result indicates that the target model is inaccurate, deactivating the target model, and/or switching to other model than the target model;
wherein, the other model includes one of the following:
   other AI model than the target model;
   other ML model than the target model;
   a non-AI model;
   a non-ML model.

An embodiment according to the present disclosure provides a terminal, including: a memory, a transceiver, and a processor, wherein the memory is used for storing a computer program, the transceiver is used for receiving and sending data under the control of the processor, and the processor is used for reading the computer program in the memory and performing the following steps:
receiving measurement configuration information sent by a network side device;
measuring a measurement object according to the measurement configuration information to obtain a measurement result;
sending the measurement result to the network side device.

In some embodiments, the measurement configuration information includes at least one of the following:
identification information of a measurement object;
measurement time information of the measurement object;
measurement periodicity of the measurement object; or
measurement window for the measurement object.

In some embodiments, the processor is used for reading the computer program in the memory and performing at least one of the following steps:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain an RSRP of the beam.

In some embodiments, the measurement object includes at least one of the following:
RSRP;
RSRQ;
RSSI;
SINR;
beam;
pilot signal; or
positioning result.

An embodiment according to the present disclosure provides a model monitoring apparatus, applied to a terminal and including:
a first receiving unit, configured to receive monitoring configuration information sent by a network side device;
a first monitoring unit, configured to monitor a target model according to the monitoring configuration information to obtain a monitoring result;
wherein, the target model includes: an artificial intelligence (AI) model and/or a machine learning (ML) model.

An embodiment according to the present disclosure provides a model monitoring apparatus, applied to a network side device and including:
a first sending unit, configured to send monitoring configuration information for monitoring a target model to a terminal;
wherein, the target model includes: an artificial intelligence (AI) model and/or a machine learning (ML) model.

An embodiment according to the present disclosure provides a model monitoring apparatus, applied to a network side device and including:
a second sending unit, configured to send measurement configuration information to a terminal;
a second receiving unit, configured to receive a measurement result sent by the terminal;
a second monitoring unit, configured to monitor a target model according to the measurement result to obtain a monitoring result;
wherein, the target model includes: an AI model and/or an ML model.

An embodiment according to the present disclosure provides a model monitoring apparatus, applied to a terminal and including:
a third receiving unit, configured to receive measurement configuration information sent by a network side device;
a first measuring unit, configured to measure a measurement object according to the measurement configuration information to obtain a measurement result;
a third sending unit, configured to send the measurement result to the network side device.

An embodiment according to the present disclosure provides a processorreadable storage medium having a computer program stored thereon. When the computer program is executed by a processor, the steps of the above-mentioned model monitoring method are implemented.

The foregoing technical solutions of the present disclosure have following beneficial effects.

In the embodiments of the present disclosure, the terminal monitors an AI model and/or ML model according to the monitoring configuration information configured by the network side device to obtain the monitoring result. By monitoring the model, relevant information of the model during usage can be obtained in a timely manner, thereby ensuring the accuracy of the model and avoiding affecting the system performance.

### BRIEF DESCRIPTION OF THE DRAWINGS

Fig. 1 is a flow chart of a model monitoring method according to an embodiment of the present disclosure;
Fig. 2 is another flow chart of a model monitoring method according to an embodiment of the present disclosure;
Fig. 3 is yet another flow chart of a model monitoring method according to an embodiment of the present disclosure;
Fig. 4 is still another flow chart of a model monitoring method according to an embodiment of the present disclosure;
Fig. 5 is a schematic structural diagram of a model monitoring apparatus according to an embodiment of the present disclosure;
Fig. 6 is another schematic structural diagram of a model monitoring apparatus according to an embodiment of the present disclosure;
Fig. 7 is yet another schematic structural diagram of a model monitoring apparatus according to an embodiment of the present disclosure;
Fig. 8 is still another schematic structural diagram of a model monitoring apparatus according to an embodiment of the present disclosure;
Fig. 9 is a schematic structural diagram of a terminal according to an embodiment of the present disclosure;
Fig. 10 is a schematic structural diagram of a network side device according to an embodiment of the present disclosure.

### DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

Expressions "one embodiment" or "an embodiment" throughout the specification mean that specific features, structures, or characteristics associated with the embodiment are included in at least one embodiment of the present disclosure. Therefore, the references to "in one embodiment" or "in an embodiment" appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the execution order of each process should be determined by its function and internal logic, and should not constitute any limitation on the implementation process of the embodiments of the present disclosure.

In the embodiments of the present disclosure, the term "and/or" describes the association relationship of associated objects, indicating that three relationships may exist. For example, A and/or B may represent: A exists alone, A and B exist at the same time, and B exists alone. The symbol "/" generally indicates that the associated objects are in an "or" relationship.

The term "multiple" used in embodiments of the present disclosure refers to two or more than two, and other quantifiers are similar thereto.

In the following, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Embodiments according to the present disclosure provide a model monitoring method and apparatus, a terminal, and a network side device, to solve the problem that the accuracy of AI/ML models decreases during usage, affecting system performance.

The method and the apparatus are based on the same creative concept. Since the method and the apparatus solve the problem in a similar principle, for the implementation of one of the apparatus and the method, reference can be made to the other of the apparatus and the method. Repeated descriptions will be omitted.

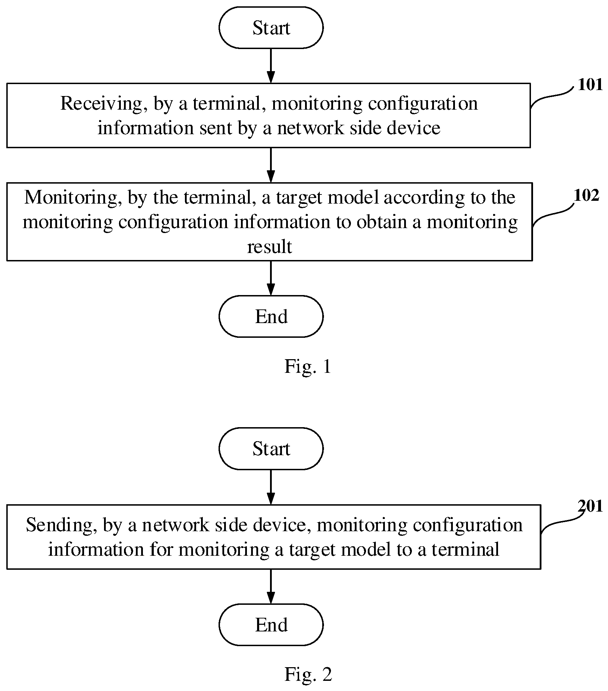

As shown in Fig. 1, an embodiment according to the present disclosure provides a model monitoring method, which is applied to a terminal and specifically includes the following steps 101 and 102.

Step 101: Receiving, by a terminal, monitoring configuration information sent by a network side device.

Step 102: Monitoring, by the terminal, a target model according to the monitoring configuration information to obtain a monitoring result; wherein the target model includes: an artificial intelligence (AI) model and/or a machine learning (ML) model.

In this embodiment, the monitoring configuration information can be used for indicating, to the terminal, the relevant information for performing model monitoring and/or the relevant information for performing information reporting. Based on the monitoring configuration information, the terminal monitors the AI model and/or ML model to obtain a monitoring result. The monitoring result can indicate the accuracy of the target model, some information of the terminal during the model monitoring process, etc.

In the embodiments of the present disclosure, the terminal monitors the AI model and/or ML model according to the monitoring configuration information configured by the network side device to obtain the monitoring result. By monitoring the model, relevant information of the model during usage can be obtained in a timely manner, thereby ensuring the accuracy of the model and avoiding affecting the system performance.

In some embodiments, the AI model and/or ML model may include the following three types:
BM model;
channel state information (CSI) compression model;
positioning accuracy enhancement model.

For the BM model, there are following two Use Cases.

Use Case 1: Based on the AI/ML model and a beam, other beams, e.g., beams in other directions, are derived through AI module calculations. In this scenario, the terminal does not need to measure a large number of pilots to obtain a beam with better quality, which can reduce the power consumption of the terminal and the pilot overhead of the base station.

Use Case 2: Through the AI/ML model, the terminal can infer the beam information at the future time, which can reduce the terminal power consumption and the overhead of the base station for sending reference signals (RS).

In this embodiment, the target model is provided at the terminal, and the terminal can apply the above two Use Cases to perform the deduction process, and report the relevant information and result of the deduction process to the network side device. The network side device can select a suitable beam and configure it to the terminal based on the result reported by the terminal.

In some embodiments, the monitoring configuration information includes at least one of the following.
(1) Monitoring mode: The network side device indicates, through the monitoring configuration information, to the terminal the mode of monitoring the target model. The monitoring mode may be, for example, periodic monitoring, monitoring within a time window, monitoring based on RSRP of a beam, or the like.
(2) Monitoring result reporting mode: After the terminal monitors the target model and obtains the monitoring result, the terminal can report the monitoring result to the network side device. The network side device indicates, through the monitoring configuration information, to the terminal the mode for the terminal to report the monitoring result. The monitoring result reporting mode includes, for example, periodic reporting, reporting within a time window, and reporting when the monitoring result meets a predetermined condition. The predetermined condition includes, for example, monitoring result indication.
(3) Monitoring periodicity: If the terminal monitors the target model in a periodic manner, the network side device needs to configure the monitoring periodicity for the terminal.
(4) Monitoring result reporting periodicity: After the terminal obtains the monitoring result, the terminal may send the monitoring result to the network side device in a periodic reporting manner. Therefore, the network side device needs to configure the periodicity of reporting the monitoring result.
(5) Time window for monitoring: If the terminal monitors the target model by monitoring the target model within a window, the network side device needs to configure a time window for the terminal to conduct the monitoring.
(6) Time window for reporting the monitoring result: After the terminal obtains the monitoring result, it can report the monitoring result within a time window. Therefore, the network side device needs to configure the time window for the terminal to report the monitoring result.
(7) Parameter threshold: The parameter threshold may be thresholds for various parameters monitored by the terminal when performing the model monitoring, for example, a threshold of a parameter for judging the accuracy of the target model, the parameter is such as RSRP, a quantity of beams, pilot signal, or positioning result.

As an optional embodiment, monitoring the target model according to the monitoring configuration information to obtain the monitoring result includes:
monitoring the target model according to a monitoring mode indicated by the monitoring configuration information to determine an accuracy of the target model.

The monitoring mode includes one of the following:
1) periodic monitoring: the network side device may indicate in the monitoring configuration information that the monitoring mode is periodic monitoring and may also indicate the monitoring periodicity;
2) monitoring within a first time window: the network side device may indicate in the monitoring configuration information that the monitoring mode is monitoring within a time window, and may also indicate that the specific time window is the first time window.

In the embodiments of the present disclosure, determining the accuracy of the target model may be determining whether the result derived from the target model is accurate. The determination may be based on a predefined threshold, or based on a comparison with the result obtained by actual measurement, for example, whether the difference between the beam information derived from the target model and the beam information actually measured is less than a predetermined threshold, or whether the signal qualities of multiple beams derived from the target model are close to the signal quality of the beam actually measured by the terminal.

In some embodiments, the result derived from the target model includes at least one of the following:
identification information of the measurement object; for example, beam identifier (ID).
beam RSRP;
time information corresponding to the measurement object, for example, the measurement time of the beam;
time information corresponding to the beam RSRP, for example, a certain time moment when the beam RSRP is obtained.

In this embodiment, the terminal can derive information of other measurement objects through using the target model, e.g., relevant information of other beams or beams at future times. Taking the measurement object being a beam as an example, the target model can deduce relevant parameters, e.g., RSRP, of other beams (e.g., beams in other directions, beams at future times). The terminal can determine an accuracy of the target model based on the deduced beam RSRP.

In some embodiments, the measurement object includes at least one of the following:
RSRP;
RSRQ;
RSSI;
SINR;
beam;
pilot signal; or
positioning result.

In this embodiment, the measurement object may be one or more measurement quantities, such as one or more beams, one or more pilot signals, one or more positioning results of a terminal. The terminal can determine whether the target model is accurate by actually measuring the measurement object and comparing the measurement result with the information of the measurement quantity derived from the target model.

As an optional embodiment, the method further includes: sending the monitoring result to the network side device.

The terminal may report the monitoring result to the network side device, and the network side device may determine whether the terminal needs to switch to another model according to the monitoring result.

In some embodiments, sending the monitoring result to the network side device includes at least one of the following:
(1) sending the monitoring result to the network side device according to a monitoring result reporting periodicity indicated by the monitoring configuration information;
(2) sending the monitoring result to the network side device within the time window for reporting the monitoring result indicated by the monitoring configuration information; or
(3) sending the monitoring result to the network side device when the monitoring result indicates that the target model is inaccurate.

In this embodiment, when the terminal reports the monitoring results to the network side device, the terminal can report according to the reporting periodicity configured by the network side device, or the terminal can report within the time window configured by the network side device; or, the terminal reports when the terminal determines that the model is inaccurate. It should be noted that the terminal can report the monitoring result in one of the above ways, or it can report the monitoring result in a manner combining the above ways, for example: when the terminal determines that the target model is inaccurate, the terminal reports the monitoring result within the reporting periodicity configured by the network side device, or, when the terminal determines that the target model is inaccurate, the terminal reports the monitoring results within the time window configured by the network side device.

In some embodiments, the monitoring result includes at least one of the following:
1) the accuracy result of the target model; for example, the result that the target model is accurate or the target model is inaccurate, or other specific parameters for indicating the accuracy result;
2) a non-target model measurement result; that is, a measurement result that is not obtained by the target model, e.g., actual measurement result used for comparison with the result derived from the target model, e.g., beam identifier selected based on multiple pilot resources;
3) a difference between a beam RSRP and a highest RSRP threshold; the beam RSRP can be the RSRP value of the beam derived from the target model, and the highest RSRP threshold is configured by the network side device;
4) a quantity of measurement objects that do not meet an accuracy determination criterion;
5) a ratio accounted for by measurement objects that do not meet the accuracy determination criterion.

The accuracy determination criterion is, for example: comparing the measurement object actually measured by the terminal with the measurement object of the result derived from the target model, if they do not match, it is considered that the accuracy determination criterion is not met; or, if the result derived from the target model does not meet a predefined parameter threshold, it is considered that the accuracy determination criterion is not met.

The manner of determining an accuracy of the target model is described hereinafter with reference to specific embodiments.

As an optional embodiment, the monitoring the target model according to a monitoring mode indicated by the monitoring configuration information to determine an accuracy of the target model includes:
measuring one or more measurement objects according to the monitoring mode indicated by the monitoring configuration information to obtain measurement results of all the measurement objects;
determining, according to the measurement results, K measurement objects whose signal quality is greater than a first threshold;
comparing the K measurement objects with a measurement object corresponding to a result derived from the target model to determine the accuracy of the target model;
wherein K is an integer greater than or equal to 1.

In this embodiment, the measurement object is monitored according to the monitoring mode indicated by the monitoring configuration information. For example, if the monitoring mode indicated by the monitoring configuration information is periodic monitoring, the measurement object is measured within the monitoring periodicity to obtain measurement results of all the measurement objects within the monitoring periodicity; if the monitoring mode indicated by the monitoring configuration information is monitoring within the first time window, the measurement object is measured within the first time window to obtain the first measurement results of all measurement objects within the first time window.

Take periodic monitoring as an example: if the network side device configures the terminal to perform model monitoring periodically, the terminal measures the measurement object within the monitoring periodicity configured by the network side device (or predefined monitoring periodicity) to obtain the measurement result of the measurement object. For example, by measuring the beam signal, the relevant information of the beam (signal quality, RSRP, etc.) can be obtained. After obtaining the measurement result, multiple measurement objects with signal quality greater than a first threshold are selected. The first threshold can be set according to the signal quality requirements of the actual communication process. The multiple measurement objects with signal quality greater than the first threshold are compared with the measurement object derived from the target model to determine the accuracy of the target model. That is, the information obtained by actual measurement is compared with the information derived from the target model, to determine the accuracy of the target model.

In some embodiments, comparing the K measurement objects with a measurement object corresponding to a result derived from the target model to determine the accuracy of the target model includes:
(1) in a case that a first target object with the highest signal quality among the K measurement objects is different from a second target object with the highest signal quality indicated by the result derived from the target model, determining that the target model is inaccurate; otherwise, determining that the target model is accurate;
   or,
(2) determining a quantity of measurement objects shared by the K measurement objects and M measurement objects corresponding to the result derived from the target model; and in a case that the quantity of the shared measurement objects is less than a second threshold, determining that the target model is inaccurate; otherwise, determining that the target model is accurate;
wherein, M is an integer greater than or equal to 1, and M and K are equal or different.

In this embodiment, when the K selected measurement objects whose signal quality is greater than the first threshold are compared with the result derived from the target model, there are two comparison methods. Method 1: compare one measurement object with the best signal quality among the K measurement objects with one object with the best signal quality in the result derived from the target model. If the two objects match (for example, they are the same beam or have similar parameter values, etc.), it is considered that the target model is accurate, that is, the target model can accurately deduce the corresponding measurement object; if the two objects do not match (for example, the two beams are different or have greatly different parameter values).

Method 2: Compare the K measurement objects with the M objects derived from the target model to determine the quantity of matching measurement objects. If the quantity of (or the ratio accounted for by) identical measurement objects meets the predefined threshold, the target model is considered accurate; otherwise the model is considered inaccurate.

The following example illustrates the implementation process of determining the accuracy of the target model through periodic monitoring. It should be noted that in the following example, the AI/ML model is provided at the terminal side. When the AI/ML model is provided at the network side device, the terminal can still perform model monitoring and reporting according to steps 6 and 7 below. The network side device switches to other model or falls back to a non-AI/ML model based on the result reported by the terminal.

Step 1: In some embodiments, the terminal reports BM AI or BM ML model information.

For example, the terminal sends AI/ML registration information to the network side device, reports the AI/ML model ID or model function, or the terminal sends the BM model to the network side device. The model function is, for example, BM management function, BM Use Case 1 or BM Use Case 2.

Step 2: In some embodiments, the network side device confirms the model information and configures the BM management monitoring/reporting mode:
The monitoring mode is a periodic monitoring mode, and accordingly, the network side device configures the AI/ML monitoring/reporting periodicity. In some embodiments, the monitoring periodicity is a first periodicity, and the reporting periodicity is a second periodicity, wherein the first periodicity and the second periodicity may be the same or different.

Step 3: The terminal executes an AI/ML model-based derivation process and reports the derivation result to the network side device:

In some embodiments, the derivation result may include at least one of the following:
One or more beam ID information;
RSRP value of one or more beams.

In some embodiments, for Use Case 2, the derivation result may include time information corresponding to each beam or beam RSRP value.

Step 4: The network side device selects one suitable beam ID according to the beam ID information reported by the terminal and configures it to the terminal. Assuming that the selected beam is the first beam, in some embodiments, the suitable beam ID may be a beam with a relatively lower load or a beam with better signal quality. The network side device sends the information of the selected first beam to the terminal, and the information of the first beam includes the beam ID.

Step 5: The terminal performs data transmission and reception on the beam indicated by the network side device.

The above steps 1 to 5 are the implementation process for the terminal to obtain the derivation result through the target model and transmit and receive data on the derived beam.

Step 6: The terminal performs AI/ML model monitoring based on the monitoring configuration information configured by the network side device:
The terminal performs periodic monitoring according to the first periodicity configured by the network side. Taking BM as an example, the terminal performs model monitoring in each period, obtains the measurement results of all beams in each period, and selects K beams with the best signal quality.

In some embodiments, the terminal compares the K beams obtained by measurement with the M beams obtained by terminal through deduction in step 3.

Determination criterion 1: The terminal compares one beam with the best signal quality among the K beams obtained by measurement with the beam with the best signal quality among the M beams derived; if the measured beam with the best signal quality does not match the derived beam with the best signal quality, the AI/ML is considered inaccurate and the result is logged; the mismatch may mean that they are not the same beam, or their signal qualities differs greatly (greater than a predefined threshold), etc.

Determination criterion 2: The terminal determines the quantity of beams shared by the K beams obtained by measurement and the M beams obtained by the terminal through deduction. For example: assume K=4=M, the IDs of 4 beams obtained by the terminal through measurement are beam A, beam B, beam C, beam D, and the IDs of 4 beams obtained by the terminal through deduction are beam A, beam C, beam E, beam F. There are 2 shared beam IDs, and the percentage is 2/4=50%. The terminal logs the value, and determines whether the quantity or percentage is less than a second threshold, wherein the second threshold is configured or predefined by the network side device. If the quantity or ratio is less than the second threshold, the AI/ML model is considered inaccurate, and the result is logged.

Step 7: The terminal reports the model monitoring result

In some embodiments, the terminal reports the monitoring result according to the second periodicity configured by the network side device.

In some embodiments, the terminal reports the monitoring result only when the AI/ML model is inaccurate.

The report may include one or more of the following:
an indication of whether the AI/ML model is accurate;
measured beam information.

Step 8: After determining that the model is inaccurate, the terminal switches to another AI/ML model and reports to the network side device, or the terminal falls back to a non-AI/ML model and reports to the network side device.

It should be noted that the above-mentioned implementation method of periodic monitoring is also applicable to monitoring within the first time window, which will not be elaborated here.

As another optional embodiment, monitoring the target model according to a monitoring mode indicated by the monitoring configuration information to determine an accuracy of the target model includes:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate, otherwise, determining that the target model is accurate; or in a case that the quantity of measurement objects for which the first measurement result does not match the result derived from the target model is greater than a third threshold, determining that the target model is inaccurate, otherwise, determining that the target model is accurate;
wherein, N is an integer greater than or equal to 1.

In this embodiment, the measurement object is monitored according to the monitoring mode indicated by the monitoring configuration information. For example, if the monitoring mode indicated by the monitoring configuration information is periodic monitoring, the measurement object is measured within the monitoring periodicity to obtain measurement results of all the measurement objects within the monitoring periodicity; if the monitoring mode indicated by the monitoring configuration information is monitoring within a first time window, the measurement object is measured within the first time window to obtain the first measurement results of all measurement objects within the first time window.

Take monitoring in the first time window as an example: if the network side device configures the terminal to perform model monitoring in the first time window, the terminal measures the measurement object in the first time window, obtains the measurement results of all measurement objects in the first time window, and logs them as the first measurement results. For example, by measuring the beam signal, relevant information of the beam (signal quality, RSRP, etc.) can be obtained.

After obtaining the measurement results, the measurement results are compared with the result derived from the target model to determine the accuracy of the target model. There are two methods to judge: Method 1: determine whether there are N consecutive measurement results in all the measurement results in the first time window that do not match the result derived from the target model. If there are N consecutive measurement results that do not match, the target model is considered inaccurate. For example: the terminal continuously measures and obtains 4 beams in the first time window, and all the 4 beams are different from the beams derived from the target model (or the difference in the relevant parameters of the beams is large), then the target model is considered inaccurate.

Method 2: Determine the quantity of measurement objects that do not match the result derived from the target model among all measurement results in the first time window. If the quantity of unmatched measurement objects is greater than a predefined threshold, the target model is considered inaccurate. For example: the third threshold is set to 3, and the terminal measures a total of 6 beams in the first time window, 4 of which are different from the beams derived from the target model (or the difference in the relevant parameters of the beams is large), which is greater than the third threshold, then the target model is considered inaccurate. In some embodiments, the accuracy of the target model can also be determined based on the ratio accounted for by unmatched measurement objects.

The following example illustrates the implementation process of determining the accuracy of the target model by monitoring within the first time window.

It should be noted that in the following examples, the AI/ML model is provided at the terminal side. When the AI/ML model is provided at the network side device, the terminal can still perform model monitoring and reporting according to the following steps 6 and 7. The network side device switches to other model or falls back to the non-AI/ML model based on the result reported by the terminal.

Step 1: In some embodiments, the terminal reports BM AI model/BM ML model information.

For example, the terminal sends AI/ML registration information to the network side device, reports the AI/ML model ID or model function, or the terminal sends the BM model to the network side device. The model function is, for example, BM management function, BM Use Case 1 or BM Use Case 2.

Step 2: In some embodiments, the network side device confirms the model information and configures the BM management monitoring/reporting mode.

The monitoring mode is monitoring within the first time window. Accordingly, the network side configures the time window for the AI/ML monitoring/reporting, as well as the maximum value P or a percentage threshold of the monitored measurement objects.

Step 3: The terminal executes the AI/ML model derivation process and reports the derivation result to the network side device.

In some embodiments, the derivation result may include at least one of the following:
one or more beam ID information;
RSRP value of one or more beams.

In some embodiments, for Use Case 2, the derivation result may include time information corresponding to each beam or beam RSRP value.

Step 4: The network side device selects one suitable beam ID according to the beam ID information reported by the terminal and configures it to the terminal. Assuming that the selected beam is the first beam, in some embodiments, the suitable beam ID may be a beam with a relatively lower load or a beam with better signal quality. The network side device sends the information of the selected first beam to the terminal, and the information of the first beam includes the beam ID.

Step 5: The terminal performs data transmission and reception on the beam indicated by the network side device.

The above steps 1 to 5 are the implementation process for the terminal to obtain the derivation result through the target model and transmit and receive data on the derived beam.

Step 6: The terminal performs AI/ML model monitoring based on the monitoring configuration information configured by the network side device.

The terminal measures, within the first time window, a set of measurement objects configured on the network side. In some embodiments, the measurement objects can be periodically monitored within the first time window. If N consecutive measurement results within the first time window do not match the derivation result, the terminal determines that the AI/ML model is inaccurate; or, if within the first time window, the quantity of or the percentage accounted for by measurement objects for which the measurement result does not match the derivation result exceeds a threshold value predefined by the network side device, the terminal determines that the AI/ML model is inaccurate.

In some embodiments, the first time window may be activated according to an indication of a network side device, or when a measurement result obtained by the terminal does not match the derivation result. In some embodiments, when the measurement result matches the derivation result, the first time window is deactivated.

Step 7: The terminal reports the model monitoring result.

In some embodiments, there are two reporting modes:
when the terminal determines that the AI/ML model is inaccurate, the terminal reports the monitoring result;
the terminal reports the monitoring result within the time window configured by the network side device.

The content of the report can be one or more of the following:
an indication of whether the AI/ML model is accurate;
measurement result of a non-AI/ML model, e.g., beam ID selected based on multiple pilot resources.

Step 8: After determining that the model is inaccurate, the terminal switches to another AI/ML model and reports it to the network side, or the terminal falls back to a non-AI/ML model and reports it to the network side device.

It should be noted that the above implementation manner of monitoring within the first time window is also applicable to periodic monitoring, which will not be elaborated here.

As another optional embodiment, monitoring the target model according to the monitoring configuration information to obtain the monitoring result includes:
monitoring, according to the monitoring configuration information, a beam reference signal received power (RSRP) indicated by the result derived from the target model to determine an accuracy of the target model.

In some embodiments, monitoring the beam RSRP indicated by the result derived from the target model according to the monitoring configuration information to determine an accuracy of the target model includes:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; otherwise, determining that the target model is accurate;
wherein, the fourth threshold is an RSRP difference threshold corresponding to the first target beam.

In this embodiment, the terminal may also calculate the difference between the RSRP of the beam configured by the network side device and the highest RSRP threshold, compare the difference with the threshold corresponding to the beam, and determine an accuracy of the target model.

The terminal uses the target model to derive multiple beams and reports the beam information to the network side device. The network side device selects one appropriate first target beam among the beams and configures it to the terminal. The first target beam is, for example, the beam with the lowest load or the beam with the best signal quality. The terminal calculates the difference between the RSRP of the first target beam and the highest RSRP threshold. If the difference is greater than the fourth threshold, the model is considered inaccurate. The highest RSRP threshold and the fourth threshold can be configured by the network side device or predefined by a protocol.

The following example illustrates a process of monitoring the target model according to the beam RSRP indicated by the result derived from the target model to determine the accuracy of the target model.

It should be noted that in the following examples, the AI/ML model is provided at the terminal side. When the AI/ML model is provided at the network side device, the terminal can still perform model monitoring and reporting according to the following steps 6 and 7. The network side device switches to other model or falls back to the non-AI/ML model based on the results reported by the terminal.

Step 1: In some embodiments, the terminal reports BM AI or BM ML model information.

For example, the terminal sends AI/ML registration information to the network side device, reports the AI/ML model ID or model function, or the terminal sends the BM model to the network side device. The model function is, for example, BM management function, BM Use Case 1 or BM Use Case 2.

Step 2: In some embodiments, the network side device confirms the model information and configures the BM management monitoring/reporting mode.

The monitoring mode is to perform monitoring according to the beam RSRP indicated by the result derived from the target model. For example: the network side device configures different RSRP threshold values for Q beams. The network side device sorts the Q beams in a descending order of signal quality: beam A, beam B, beam C... beam Q. The network side device configures different RSRP difference thresholds for the Q beams; for example, for beam A, threshold 1 is defined, for beam B, threshold 2 is defined, and so on. The network side device defines the highest RSRP threshold value and the fourth threshold.

Step 3: The terminal executes the AI/ML model derivation process and reports the derivation result to the network side device:

In some embodiments, the derivation result may include at least one of the following:
one or more beam ID information;
RSRP value of one or more beams.

In some embodiments, for Use Case 2, the derivation result may include time information corresponding to each beam or beam RSRP value.

Step 4: The network side device selects one suitable beam ID according to the beam ID information reported by the terminal and configures it to the terminal. Assuming that the selected beam is the first beam (i.e., the first target beam), in some embodiments, the suitable beam ID may be a beam with a relatively lower load or a beam with better signal quality. The network side device sends the information of the selected first beam to the terminal, and the information of the first beam includes the beam ID.

Step 5: The terminal performs data transmission and reception on the beam indicated by the network side device.

The above steps 1 to 5 are the implementation process for the terminal to obtain the derivation result through the target model and transmit and receive data on the derived beam.

Step 6: The terminal performs AI/ML model monitoring based on the monitoring configuration information configured by the network side device.

The network side device configures multiple thresholds. Assume that the terminal reports Q beam information, and the Q beams are sorted in the descending order of signal quality, namely: beam A, beam B, beam C... beam Q. The network side configures different RSRP difference thresholds for the Q beams. For example, for beam A, threshold 1 is defined, and so on; the network side device configures the highest RSRP threshold value.

The terminal selects the corresponding threshold according to the first beam (i.e., the first target beam) configured by the network side device, and determines whether the difference between the first beam and the highest RSRP threshold value exceeds the corresponding threshold. Assume that the first beam is beam A, the corresponding threshold is the threshold 1. The terminal measures the RSRP of beam A and compares it with the highest threshold to determine whether the difference is higher than the threshold 1. If the difference is higher than threshold 1, the terminal determines that the signal quality of beam A is poor, and the AI/ML model is considered inaccurate.

Step 7: The terminal reports the model monitoring result.

In some embodiments, the terminal reports the monitoring result according to the reporting periodicity configured by the network side device.

In some embodiments, the terminal reports the monitoring result when the AI/ML model is inaccurate.

The report may include one or more of the following:
an indication of whether the AI/ML model is accurate;
the measurement result difference between the AI/ML model and the non-AI/ML model, e.g., the RSRP difference.

Step 8: After determining that the model is inaccurate, the terminal switches to another AI/ML model and reports it to the network device. Alternatively, the terminal falls back to a non-AI/ML model and reports it to the network device.

As an optional embodiment, after obtaining the monitoring result, the method further includes:
in a case that the monitoring result indicates that the target model is inaccurate, switching to other model than the target model;
wherein, the other model includes one of the following:
   other AI model than the target model;
   other ML model than the target model;
   a non-AI model;
   a non-ML model.

In this embodiment, after the terminal obtains the monitoring result, if it is determined that the target model is inaccurate, the terminal can switch to other AI/ML model or fall back to the non-AI/ML model.

In some embodiments, after obtaining the monitoring result, the method further includes:
receiving first indication information sent by the network side device; deactivating the target model according to the first indication information, and/or switching to other model than the target model according to the first indication information.

In this embodiment, after the terminal obtains the monitoring result, it can report the monitoring result to the network side device. If the network side device determines that the target model is inaccurate, the network side device can send a first indication information to the terminal to instruct the terminal to deactivate the target model and/or switch to other AI/ML model or fall back to the non-AI/ML model.

In the embodiments of the present disclosure, the terminal monitors the AI model and/or ML model according to the monitoring configuration information configured by the network side device to obtain the monitoring result. By monitoring the model, relevant information of the model during usage can be obtained in a timely manner, thereby ensuring the accuracy of the model and avoiding affecting the system performance.

As shown in Fig. 2, an embodiment of the present disclosure further provides a model monitoring method, which is applied to a network side device, and includes:
Step 201: Sending, by a network side device, monitoring configuration information for monitoring a target model to a terminal; wherein the target model includes: an artificial intelligence (AI) model and/or a machine learning (ML) model.

In this embodiment, the monitoring configuration information can be used for indicating, to the terminal, the relevant information for performing model monitoring and/or the relevant information for performing information reporting. The network side device configures the monitoring configuration information for the terminal, so that the terminal can monitor the AI model and/or ML model based on the monitoring configuration information and obtain the monitoring result. The monitoring result can indicate the accuracy of the target model, some information of the terminal during the model monitoring process, etc.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

As an optional embodiment, the method further includes:
receiving the monitoring result sent by the terminal; and determining the accuracy of the target model according to the monitoring result.

The terminal may report the monitoring result to the network side device, and the network side device may determine an accuracy of the target model according to the monitoring result, thereby determining whether the model needs to be switched.

It should be noted that the implementation method of the terminal performing model monitoring according to the monitoring configuration information configured by the network side device to obtain a monitoring result, and/or the implementation method of the terminal reporting the monitoring result are similar to the above-mentioned embodiments applied to the terminal, and will not be repeated here.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

As an optional embodiment, after receiving the monitoring result, the method further includes:
in a case that the monitoring result indicates that the target model is inaccurate, sending first indication information to the terminal; wherein the first indication information is used for instructing the terminal to deactivate the target model and/or switch to other model than the target model.

In this embodiment, if the network side device determines that the target model is inaccurate, it can send a first indication information to the terminal to instruct the terminal to deactivate the target model, and/or switch to other AI/ML model or fall back to a non-AI/ML model.

In the embodiments of the present disclosure, the network side device sends monitoring configuration information to the terminal, so that the terminal monitors the AI model and/or ML model according to the monitoring configuration information configured by the network side device to obtain a monitoring result. By monitoring the model, relevant information of the model during usage can be obtained in a timely manner, thereby ensuring the accuracy of the model and avoiding affecting system performance.

It should be noted that in the embodiments of the present disclosure, the target model can be provided at the terminal side or at the network side device. The above Figs. 1 and 2 show the implementation process of model monitoring when the target model is provided at the terminal. The following will explain, through specific embodiments, the implementation method of model monitoring when the target model is provided at the network side device.

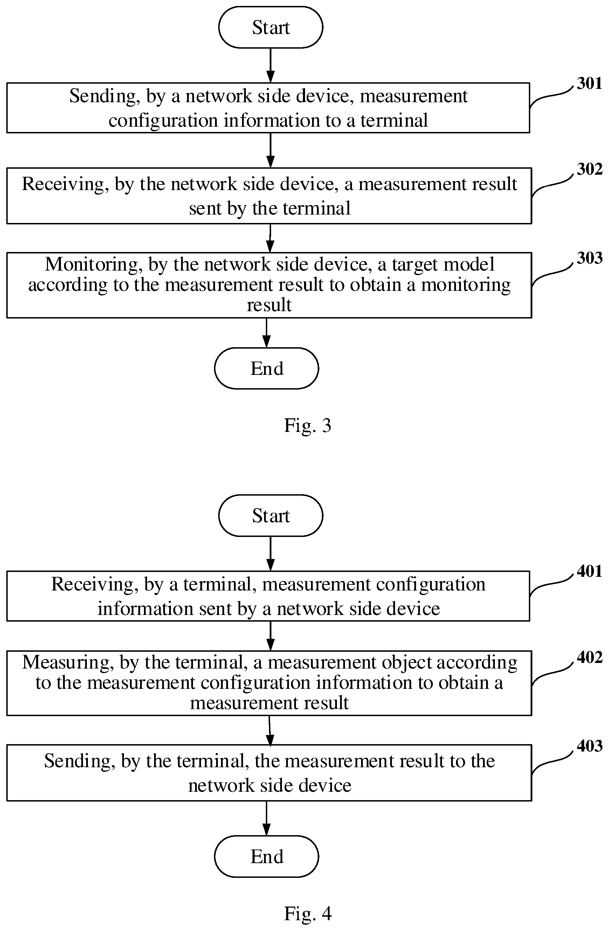

As shown in Fig. 3, an embodiment of the present disclosure further provides a model monitoring method, which is applied to a network side device, and includes the following steps 301 to 303.

Step 301: Sending, by a network side device, measurement configuration information to a terminal.

In some embodiments, the measurement configuration information includes at least one of the following:
identification information of a measurement object;
measurement time information of the measurement object;
measurement periodicity of the measurement object; or
measurement window for the measurement object.

Step 302: Receiving, by the network side device, a measurement result sent by the terminal.

Step 303: Monitoring, by the network side device, a target model according to the measurement result to obtain a monitoring result; wherein the target model includes: an AI model and/or an ML model.

In this embodiment, the target model is provided at the network side device, that is, the network side device can use the target model for deduction, for example: through the beam of the AI/ML model, derive other beams or beams at future times. The process of model deduction by the network side device is similar to the process of model deduction by the above-mentioned terminal, which will not be repeated here.

The network side device can configure measurement configuration information for the terminal, indicating the measurement object that the terminal needs to measure, the time corresponding to the measurement object (e.g., beam transmission time), the measurement periodicity, the measurement time window, and the like. The terminal can measure the measurement object according to the measurement configuration information and obtain the measurement result, for example, the measurement result is: the identifier of the measurement object, the measurement time corresponding to the measurement object, the signal quality corresponding to the measurement object, RSRQ, etc. The terminal reports the measurement result to the network side device, and after receiving the measurement result, the network side device can monitor the target model according to the measurement result to determine an accuracy of the target model.

In the embodiments of the present disclosure, the network side device configures measurement configuration information for the terminal, so that the terminal measures the measurement object according to the measurement configuration information, and the terminal obtains and reports the measurement results. The network side device can monitor the AI model and/or ML model according to the measurement results to obtain a monitoring result. By monitoring the model, relevant information of the model during usage can be obtained in a timely manner, thereby ensuring the accuracy of the model and avoiding affecting system performance.

As an optional embodiment, monitoring the target model according to the measurement result to obtain the monitoring result includes:
determining, according to the measurement result, X measurement objects whose signal quality is greater than a fifth threshold;
comparing the X measurement objects with a measurement object corresponding to a result derived from the target model to determine an accuracy of the target model; wherein X is an integer greater than or equal to 1.

In this embodiment, after obtaining the measurement results reported by the terminal, the network side device selects multiple measurement objects whose signal quality is greater than a fifth threshold value, and the fifth threshold value may be set according to the signal quality requirement of the actual communication process. The multiple measurement objects whose signal quality is greater than the fifth threshold value are compared with the measurement object derived from the target model, so as to determine an accuracy of the target model. That is, the information obtained by actual measurement is compared with the information derived from the target model to determine the accuracy of the target model.

In some embodiments, comparing the X measurement objects with a measurement object corresponding to a result derived from the target model to determine an accuracy of the target model includes:
in a case that a third target object with the highest signal quality among the X measurement objects is different from a fourth target object with the highest signal quality indicated by the result derived from the target model, determining that the target model is inaccurate; otherwise, determining that the target model is accurate;
   or,
determining a quantity of measurement objects shared by the X measurement objects and Y measurement objects corresponding to the result derived from the target model, and in a case that the quantity of the shared measurement objects is less than a sixth threshold, determining that the target model is inaccurate; otherwise, determining that the target model is accurate;
wherein, Y is an integer greater than or equal to 1, and X and Y are equal or different.

In this embodiment, when comparing the selected X measurement objects whose signal quality is greater than the fifth threshold with the result derived from the target model, there may be two comparison methods. Method 1: Compare one measurement object with the best signal quality among the X measurement objects with one object with the best signal quality in the result derived from the target model. If the two objects match (for example, they are the same beam or have similar parameter values, etc.), it is considered that the target model is accurate, that is, the target model can accurately deduce the corresponding measurement object; if the two objects do not match (for example, the two beams are different or the parameter values are greatly different).

Method 2: Compare X measurement objects with Y objects in the result derived from the target model to determine the quantity of matching measurement objects. If the quantity of (or ratio accounted for by) matching measurement objects meets a predefined threshold, the target model is considered accurate; otherwise the model is considered inaccurate.

As another optional embodiment, monitoring the target model according to the measurement result to obtain the monitoring result includes:
in a case that Z consecutive measurement results do not match the result derived from the target model, determining that the target model is inaccurate; otherwise, determining that the target model is accurate;
   or,
in a case that a quantity of measurement objects for which the measurement result does not match the result derived from the target model is greater than a seventh threshold, determining that the target model is inaccurate; otherwise, determining that the target model is accurate; wherein Z is an integer greater than or equal to 1.

In this embodiment, the Z consecutive measurement results may be measurement results obtained within a preset measurement time window. After the network side device obtains the measurement result reported by the terminal, the network side device compares the measurement result with the result derived from the target model to determine the accuracy of the target model. There are two determination methods. Method 1: Determine whether there are Z consecutive measurement results in all measurement results that do not match the result derived from the target model. If the Z consecutive measurement results do not match the result derived from the target model, the target model is considered inaccurate.

Method 2: Determine the quantity of measurement objects in all measurement results that do not match the result derived from the target model. If the quantity of unmatched measurement objects is greater than the predefined seventh threshold, the target model is considered inaccurate. For example: the seventh threshold is set to 3, and the terminal reports a total of 6 beam measurement results, 4 of which are different from the beam derived from the target model (or the difference in the relevant parameters of the beams is large), thus the quantity of measurement objects that do not match the result derived from the target model is greater than the seventh threshold, then the target model is considered inaccurate. In some embodiments, the accuracy of the target model can also be determined based on the ratio accounted for by unmatched measurement objects.

As another optional embodiment, monitoring the target model according to the measurement result to obtain the monitoring result includes:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; otherwise, determining that the target model is accurate;
wherein, the eighth threshold is an RSRP difference threshold corresponding to the second target beam.

In this embodiment, the second target beam can be one beam selected by the network side device from multiple beams derived from the target model. The second target beam can be the beam with the smallest load or the beam with the highest signal quality. The network side device configures the second target beam to the terminal for measurement, and the terminal reports the measurement result. The network side device can calculate the difference between the RSRP of the second target beam and the highest RSRP threshold. If the difference is greater than the eighth threshold, the model is considered inaccurate. The highest RSRP threshold and the eighth threshold can be configured by the network side device or predefined by a protocol.

In some embodiments, the result derived from the target model includes at least one of the following:
identification information of a measurement object;
beam RSRP;
time information corresponding to the measurement object; or
time information corresponding to the beam RSRP.

In this embodiment, the network side device can obtain the information of other measurement objects through the measurement object deduction of the target model, e.g., related information of other beams or beams at future times. Taking the measurement object being a beam as an example, the target model can deduce related parameters of other beams (e.g., beams in other directions, beams at future times), e.g., RSRP. The network side device can determine an accuracy of the target model based on the deduced beam RSRP.

In some embodiments, the measurement object includes at least one of the following:
RSRP;
RSRQ;
RSSI;
SINR;
beam;
pilot signal; or
positioning result.

In this embodiment, the measurement object may be one or more measurement quantities, such as one or more beams, one or more pilot signals, or one or more positioning results of a terminal. The terminal actually measures the measurement object and reports the measurement result, and the network side device may compare the measurement result with the information of the measurement quantity derived from the target model to determine whether the target model is accurate.

As an optional embodiment, after obtaining the monitoring result, the method further includes:
in a case that the monitoring result indicates that the target model is inaccurate, deactivating the target model, and/or switching to other model than the target model;
wherein, the other model includes one of the following:
   other AI model than the target model;
   other ML model than the target model;
   a non-AI model;
   a non-ML model.

In this embodiment, after the network side device obtains the monitoring result, if it is determined that the target model is inaccurate, the network side device can switch to other AI/ML models or fall back to non-AI/ML models.

In the embodiments of the present disclosure, the network side device configures measurement configuration information for the terminal, so that the terminal measures the measurement object according to the measurement configuration information, and the terminal obtains and reports the measurement results. The network side device can monitor the AI model and/or ML model according to the measurement results to obtain a monitoring result. By monitoring the model, relevant information of the model during usage can be obtained in a timely manner, thereby ensuring the accuracy of the model and avoiding affecting system performance.

As shown in Fig. 4, an embodiment of the present disclosure further provides a model monitoring method, which is applied to a terminal and includes following steps 401 to 403.

Step 401: Receiving, by a terminal, measurement configuration information sent by a network side device.

In some embodiments, the measurement configuration information includes at least one of the following:
identification information of a measurement object;
measurement time information of the measurement object;
measurement periodicity of the measurement object; or
measurement window for the measurement object.

Step 402: Measuring, by the terminal, a measurement object according to the measurement configuration information to obtain a measurement result.

Step 403: Sending, by the terminal, the measurement result to the network side device.

In this embodiment, the target model is provided at the network side device, that is, the network side device can use the target model for deduction, for example: through the beam of the AI/ML model, derive other beams or beams at future times.

The network side device can configure measurement configuration information for the terminal, indicating the measurement object that the terminal needs to measure, the time corresponding to the measurement object (e.g., beam transmission time), the measurement periodicity, the measurement time window, and other information. The terminal can measure the measurement object according to the measurement configuration information and obtain the measurement result, the measurement result is, for example, the identification of the measurement object, the measurement time corresponding to the measurement object, the signal quality corresponding to the measurement object, RSRQ, etc. The terminal reports the measurement result to the network side device, and after receiving the measurement result, the network side device can monitor the target model according to the measurement result to determine an accuracy of the target model.

In some embodiments, measuring the measurement object according to the measurement configuration information to obtain a measurement result includes at least one of the following:
(1) measuring the measurement object within a measurement periodicity indicated by the measurement configuration information to obtain measurement results of all the measurement objects within the measurement periodicity; in this case, the network side device may configure the measurement periodicity for the terminal, the terminal performs measurement within the measurement periodicity, and obtains the measurement results of the measurement objects within the measurement periodicity;
(2) measuring the measurement object within a measurement window indicated by the measurement configuration information to obtain measurement results of all the measurement objects within the measurement window; in this case, the network side device may configure a measurement time window for the terminal, and the terminal performs measurement within the measurement time window, and obtains measurement results of the measurement objects within the measurement time window; or
(3) measuring a beam indicated by the measurement configuration information to obtain an RSRP of the beam; the network side device may indicate to the terminal the relevant information of the beam that needs to be measured, e.g., the beam ID, the time of the beam, the parameters that need to be measured, etc.

In some embodiments, the measurement object includes at least one of the following:
RSRP;
RSRQ;
RSSI;
SINR;
beam;
pilot signal; or
positioning result.

In some embodiments, sending, by the terminal, the measurement result to the network side device may include at least one of the following:
sending the measurement result to the network side device according to a measurement result reporting periodicity configured by the network side device;
sending the measurement result to the network side device in a time window for reporting the measurement result configured by the network side device; or
in a case that the measurement result meets a preset condition, sending the measurement result to the network side device; the preset condition is, for example, that a parameter value of the measurement result meets a predetermined threshold.

In the embodiment of the present disclosure, the terminal receives measurement configuration information configured by a network side device, and measures the measurement object according to the measurement configuration information to obtain the measurement result and report it. The network side device can monitor the AI model and/or ML model according to the measurement result to obtain the monitoring result. By monitoring the model, relevant information of the model during usage can be obtained in a timely manner, thereby ensuring the accuracy of the model and avoiding affecting system performance.

The above embodiments introduce the model monitoring methods of the present disclosure. The following embodiments will further illustrate corresponding apparatuses with reference to the accompanying drawings.

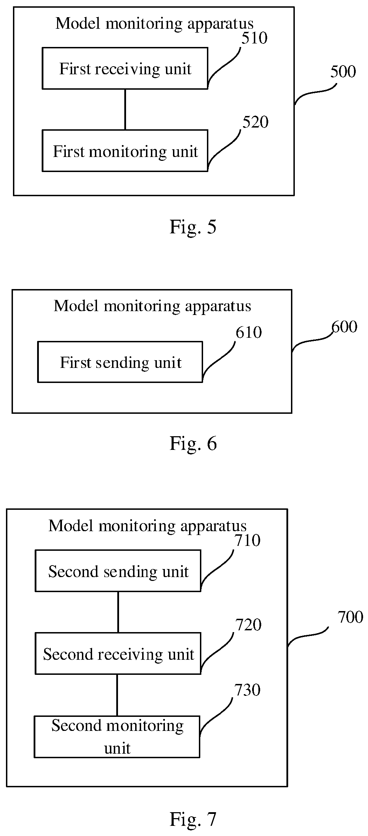

Specifically, as shown in Fig. 5, an embodiment according to the present disclosure provides a model monitoring apparatus 500, which is applied to a terminal and includes:
a first receiving unit 510, configured to receive monitoring configuration information sent by the network side device;
a first monitoring unit 520, configured to monitor a target model according to the monitoring configuration information to obtain a monitoring result;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the first monitoring unit includes:
a first determining subunit, configured to monitor the target model according to a monitoring mode indicated by the monitoring configuration information to determine an accuracy of the target model;
wherein the monitoring mode includes one of the following:
   periodic monitoring; and
   monitoring within a first time window.

In some embodiments, the first determining subunit is specifically configured to:
measure one or more measurement objects according to the monitoring mode indicated by the monitoring configuration information to obtain measurement results of all the measurement objects;
determine, according to the measurement results, K measurement objects whose signal quality is greater than a first threshold;
compare the K measurement objects with a measurement object corresponding to a result derived from the target model to determine the accuracy of the target model;
wherein K is an integer greater than or equal to 1.

In some embodiments, the first determining subunit is specifically configured to:
in a case that a first target object with the highest signal quality among the K measurement objects is different from a second target object with the highest signal quality indicated by the result derived from the target model, determine that the target model is inaccurate; otherwise, determine that the target model is accurate;
   or,
determine a quantity of measurement objects shared by the K measurement objects and M measurement objects corresponding to the result derived from the target model, and in a case that the quantity of the shared measurement objects is less than a second threshold, determine that the target model is inaccurate; otherwise, determine that the target model is accurate;
wherein, M is an integer greater than or equal to 1, and M and K are equal or different.

In some embodiments, the first determining subunit is specifically configured to:
measure one or more measurement objects according to the monitoring mode indicated by the monitoring configuration information to obtain first measurement results of all the measurement objects;
in a case that N consecutive first measurement results of the first measurement results do not match the result derived from the target model, determine that the target model is inaccurate; otherwise, determine that the target model is accurate;
   or,
in a case that a quantity of measurement objects for which the first measurement result does not match the result derived from the target model is greater than a third threshold, determine that the target model is inaccurate; otherwise, determine that the target model is accurate;
wherein N is an integer greater than or equal to 1.

In some embodiments, the first monitoring unit includes:
a second determining subunit, configured to monitor, according to the monitoring configuration information, a beam reference signal received power (RSRP) indicated by the result derived from the target model to determine an accuracy of the target model.

In some embodiments, the second determining subunit is specifically configured to:
determine, according to the monitoring configuration information, an RSRP of a first target beam configured by the network side device, wherein the first target beam is a beam derived from the target model;
in a case that a difference between the RSRP of the first target beam and a highest RSRP threshold is greater than a fourth threshold, determine that the target model is inaccurate; otherwise, determine that the target model is accurate;
wherein, the fourth threshold is an RSRP difference threshold corresponding to the first target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the apparatus further includes:
a first processing unit, configured to, in a case that the monitoring result indicates that the target model is inaccurate, switch to other model than the target model;
wherein, the other model includes one of the following:
   AI models different from the target model;
   other ML model than the target model;
   a non-AI model;
   a non-ML model.

In some embodiments, the apparatus further includes:
a fourth receiving unit, configured to receive first indication information sent by the network side device;
a second processing unit, configured to deactivate the target model according to the first indication information; and/or switch to other model than the target model according to the first indication information.

In some embodiments, the apparatus further includes:
a fourth sending unit, configured to send the monitoring result to the network side device.

In some embodiments, the fourth sending unit is specifically configured to perform at least one of the following:
sending the monitoring result to the network side device according to a monitoring result reporting periodicity indicated by the monitoring configuration information;
sending the monitoring result to the network side device within a time window for reporting the monitoring result that is indicated by the monitoring configuration information; or
sending the monitoring result to the network side device in a case that the monitoring result indicates that the target model is inaccurate.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

It should be noted here that the above-mentioned apparatus provided by the embodiment of the present disclosure can implement all the method steps implemented by the above-mentioned method embodiment applied to the terminal, and can achieve the same technical effect. The parts and beneficial effects of this embodiment that are the same as the method embodiment will not be described in detail here.

Specifically, as shown in Fig. 6, an embodiment according to the present disclosure provides a model monitoring apparatus 600, which is applied to a network side device and includes:
a first sending unit 610, configured to send monitoring configuration information for monitoring a target model to a terminal;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the apparatus further includes:
a fifth receiving unit, configured to receive a monitoring result sent by a terminal;
a third processing unit, configured to determine an accuracy of the target model according to the monitoring result.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

In some embodiments, the apparatus further includes:
a fifth sending unit, configured to, in a case that the monitoring result indicates that the target model is inaccurate, send first indication information to the terminal; the first indication information is used for instructing the terminal to deactivate the target model and/or switch to other model than the target model.

It should be noted here that the above-mentioned apparatus according to the embodiment of the present disclosure can implement all the method steps implemented by the above-mentioned method embodiment performed by the network side device, and can achieve the same technical effect. The parts and beneficial effects of this embodiment that are the same as the method embodiment will not be described in detail here.

Specifically, as shown in Fig. 7, an embodiment according to the present disclosure provides a model monitoring apparatus 700, which is applied to a network side device, and includes:
a second sending unit 710, configured to send measurement configuration information to a terminal;
a second receiving unit 720, configured to receive a measurement result sent by the terminal;
a second monitoring unit 730, configured to monitor a target model according to the measurement result to obtain a monitoring result;
wherein, the target model includes: an AI model and/or an ML model.

In some embodiments, the measurement configuration information includes at least one of the following:
identification information of a measurement object;
measurement time information of the measurement object;
measurement periodicity of the measurement object; or
measurement window for the measurement object.

In some embodiments, the second monitoring unit is specifically configured to:
determine, according to the measurement result, X measurement objects whose signal quality is greater than a fifth threshold;
compare the X measurement objects with a measurement object corresponding to a result derived from the target model to determine an accuracy of the target model;
wherein X is an integer greater than or equal to 1.

In some embodiments, the second monitoring unit is specifically configured to:
in a case that a third target object with the highest signal quality among the X measurement objects is different from a fourth target object with the highest signal quality indicated by the result derived from the target model, determine that the target model is inaccurate; otherwise, determine that the target model is accurate;
   or,
determine a quantity of measurement objects shared by the X measurement objects and Y measurement objects corresponding to the result derived from the target model, and in a case that the quantity of the shared measurement objects is less than a sixth threshold, determine that the target model is inaccurate; otherwise, determine that the target model is accurate;
wherein, Y is an integer greater than or equal to 1, and X and Y are equal or different.

In some embodiments, the second monitoring unit is specifically configured to:
in a case that Z consecutive measurement results do not match the result derived from the target model, determine that the target model is inaccurate; otherwise, determine that the target model is accurate;
   or,
in a case that a quantity of measurement objects for which the measurement result does not match the result derived from the target model is greater than a seventh threshold, determine that the target model is inaccurate; otherwise, determine that the target model is accurate;
wherein Z is an integer greater than or equal to 1.

In some embodiments, the second monitoring unit is specifically configured to:
determine an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determine that the target model is inaccurate; otherwise, determine that the target model is accurate;
wherein, the eighth threshold is an RSRP difference threshold corresponding to the second target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the apparatus further includes:
a fourth processing unit, configured to, in a case that the monitoring result indicates that the target model is inaccurate, deactivate the target model, and/or switch to other model than the target model;
wherein, the other model includes one of the following:
   other AI model than the target model;
   other ML model than the target model;
   a non-AI model;
   a non-ML model.

It should be noted here that the above-mentioned apparatus according to the embodiment of the present disclosure can implement all the method steps implemented by the above-mentioned method embodiment performed by the network side device, and can achieve the same technical effect. The parts and beneficial effects of this embodiment that are the same as the method embodiment will not be described in detail here.

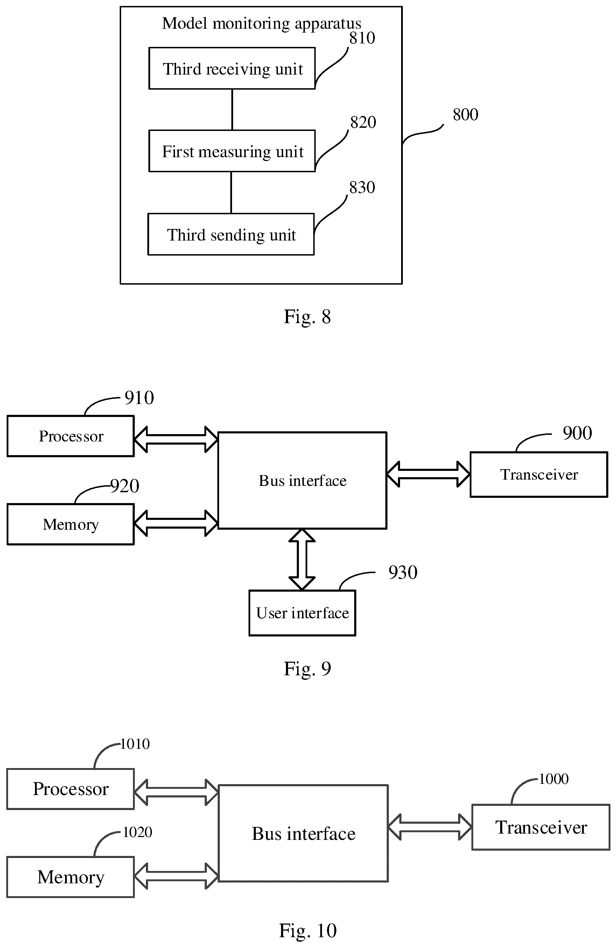

Specifically, as shown in Fig. 8, an embodiment according to the present disclosure provides a model monitoring apparatus 800, which is applied to a terminal and includes:
a third receiving unit 810, configured to receive measurement configuration information sent by the network side device;
a first measuring unit 820, configured to measure a measurement object according to the measurement configuration information to obtain a measurement result;
a third sending unit 830, configured to send the measurement result to the network side device.

In some embodiments, the measurement configuration information includes at least one of the following:
identification information of a measurement object;
measurement time information of the measurement object;
measurement periodicity of the measurement object; or
measurement window for the measurement object.

In some embodiments, the first measuring unit is specifically configured to perform at least one of the following:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain the RSRP of the beam.

In some embodiments, the measurement object includes at least one of the following:
RSRP;
RSRQ;
RSSI;
SINR;
beam;
pilot signal; or
positioning result.

It should be noted here that the above-mentioned apparatus according to the embodiment of the present disclosure can implement all the method steps implemented by the above-mentioned method embodiment performed by the terminal, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

As shown in Fig. 9, an embodiment of the present disclosure further provides a terminal, including: a memory 920, a transceiver 900, and a processor 910; wherein the memory 920 is used for storing a computer program; the transceiver 900 is used for receiving and sending data under the control of the processor 910; the processor 910 is used for reading the computer program in the memory and performing the following steps:
receiving monitoring configuration information sent by a network side device;
monitoring a target model according to the monitoring configuration information to obtain a monitoring result;
wherein, the target model includes: an artificial intelligence (AI) model and/or a machine learning (ML) model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the processor is used for reading the computer program in the memory and performing the following step:
monitoring the target model according to a monitoring mode indicated by the monitoring configuration information to determine an accuracy of the target model;
wherein the monitoring mode includes one of the following:
   periodic monitoring; and
   monitoring within a first time window.

In some embodiments, the processor is used for reading the computer program in the memory and performing the following steps:
measuring one or more measurement objects according to the monitoring mode indicated by the monitoring configuration information to obtain measurement results of all the measurement objects;
determining, according to the measurement results, K measurement objects whose signal quality is greater than a first threshold;
comparing the K measurement objects with a measurement object corresponding to a result derived from the target model to determine the accuracy of the target model;
wherein K is an integer greater than or equal to 1.

In some embodiments, the processor is used for reading the computer program in the memory and performing the following steps:
in a case that a first target object with the highest signal quality among the K measurement objects is different from a second target object with the highest signal quality indicated by the result derived from the target model, determining that the target model is inaccurate; otherwise, determining that the target model is accurate;
   or,
determining a quantity of measurement objects shared by the K measurement objects and M measurement objects corresponding to the result derived from the target model, and in a case that the quantity of the shared measurement objects is less than a second threshold, determining that the target model is inaccurate; otherwise, determining that the target model is accurate;
wherein, M is an integer greater than or equal to 1, and M and K are equal or different.

In some embodiments, the processor is used for reading the computer program in the memory and performing the following steps:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate; otherwise, determining that the target model is accurate;
   or,
in a case that a quantity of measurement objects for which the first measurement result does not match the result derived from the target model is greater than a third threshold, determining that the target model is inaccurate; otherwise, determining that the target model is accurate;
wherein N is an integer greater than or equal to 1.

In some embodiments, the processor is used for reading the computer program in the memory and performing the following steps:
monitoring, according to the monitoring configuration information, a beam reference signal received power (RSRP) indicated by the result derived from the target model to determine an accuracy of the target model.

In some embodiments, the processor is used for reading the computer program in the memory and performing the following steps:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; otherwise, determining that the target model is accurate;
wherein, the fourth threshold is an RSRP difference threshold corresponding to the first target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the processor is used for reading the computer program in the memory and performing the following steps:
in a case that the monitoring result indicates that the target model is inaccurate, switching to other model than the target model;
wherein, the other model includes one of the following:
   other AI model than the target model;
   other ML model than the target model;
   a non-AI model;
   a non-ML model.

In some embodiments, the processor is used for reading the computer program in the memory and performing the following steps:
receiving first indication information sent by the network side device;
deactivating the target model according to the first indication information; and/or switching to other model than the target model according to the first indication information.

In some embodiments, the processor is used for reading the computer program in the memory and performing the following steps:
sending the monitoring result to the network side device.

In some embodiments, the processor is used for reading the computer program in the memory and performing at least one of the following steps:
sending the monitoring result to the network side device according to a monitoring result reporting periodicity indicated by the monitoring configuration information;
sending the monitoring result to the network side device within a time window for reporting the monitoring result that is indicated by the monitoring configuration information; or
sending the monitoring result to the network side device in a case that the monitoring result indicates that the target model is inaccurate.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

In Figure 9, the bus architecture may include any number of interconnected buses and bridges, specifically various circuits such as one or more processors represented by processor 910 and memory represented by memory 920 are linked together. The bus architecture can also link various other circuits such as peripherals, voltage regulators, and power management circuits together, which are all well known in the art and are therefore not further described herein. The bus interface provides an interface. The transceiver 900 can be a plurality of components, namely, a transmitter and a receiver, providing a unit for communicating with various other devices on a transmission medium. For different user equipment, the user interface 930 can also be an interface that can connect required devices externally or internally, and the connected devices include but are not limited to keypads, displays, speakers, microphones, joysticks, etc.

The processor 910 is responsible for managing the bus architecture and general processing, and the memory 920 can store data used by the processor 910 when performing operations.

In some embodiments, the processor 910 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to perform, as per the obtained executable instructions, any of the methods according to the embodiments of the present disclosure. The processor and the memory can also be arranged physically separately.

It should be noted here that the above-mentioned apparatus according to the embodiment of the present disclosure can implement all the method steps implemented by the above-mentioned method embodiment performed by the terminal, and can achieve the same technical effect. The parts and beneficial effects of this embodiment that are the same as the method embodiment will not be described in detail here.

As shown in Fig. 10, an embodiment of the present disclosure further provides a network side device, including: a memory 1020, a transceiver 1000, and a processor 1010; wherein the memory 1020 is used for storing a computer program; the transceiver 1000 is used for receiving and sending data under the control of the processor 1010; the processor 1010 is used for reading the computer program in the memory and performing the following step:
sending monitoring configuration information for monitoring a target model to a terminal;
wherein, the target model includes: an AI model and/or an ML model.

In some embodiments, the monitoring configuration information includes at least one of the following:
monitoring mode;
mode for reporting the monitoring result;
monitoring periodicity;
monitoring result reporting periodicity;
time window for monitoring;
time window for reporting the monitoring result; or
parameter threshold.

In some embodiments, the processor is used for reading the computer program in the memory and performing the following steps:
receiving a monitoring result sent by the terminal;
determining an accuracy of the target model according to the monitoring result.

In some embodiments, the monitoring result includes at least one of the following:
an accuracy result of the target model;
a non-target model measurement result;
a difference between a beam RSRP and a highest RSRP threshold;
a quantity of measurement objects that do not meet an accuracy determination criterion;
a ratio accounted for by measurement objects that do not meet the accuracy determination criterion.

In some embodiments, the processor is used for reading the computer program in the memory and performing the following step:
in a case that the monitoring result indicates that the target model is inaccurate, sending first indication information to the terminal; wherein the first indication information is used for instructing the terminal to deactivate the target model and/or switch to other model than the target model.

In Fig. 10, the bus architecture may include any number of interconnected buses and bridges, specifically various circuits such as one or more processors represented by processor 1010 and memory represented by memory 1020 are linked together. The bus architecture may also link together various other circuits e.g., peripherals, voltage regulators, and power management circuits, which are well known in the art and are therefore not further described herein. The bus interface provides an interface. The transceiver 1000 may be a plurality of components, namely, a transmitter and a receiver, providing a unit for communicating with various other devices on a transmission medium. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned apparatus according to the embodiment of the present disclosure can implement all the method steps implemented by the above-mentioned method embodiment performed by the network side device, and can achieve the same technical effect. The parts and beneficial effects of this embodiment that are the same as the method embodiment will not be described in detail here.

Referring to Fig. 10, an embodiment of the present disclosure further provides a network side device, including: a memory, a transceiver, and a processor; wherein the memory is used for storing a computer program; the transceiver is used for receiving and sending data under the control of the processor; the processor is used for reading the computer program in the memory and performing the following steps:
sending measurement configuration information to the terminal;
receiving a measurement result sent by the terminal;
monitoring a target model according to the measurement result to obtain a monitoring result;
wherein, the target model includes: an AI model and/or an ML model.

In some embodiments, the measurement configuration information includes at least one of the following:
identification information of a measurement object;
measurement time information of the measurement object;
measurement periodicity of the measurement object; or
measurement window for the measurement object.

In some embodiments, the processor is used for reading the computer program in the memory and performing the following steps:
determining, according to the measurement result, X measurement objects whose signal quality is greater than a fifth threshold;
comparing the X measurement objects with a measurement object corresponding to a result derived from the target model to determine an accuracy of the target model;
wherein X is an integer greater than or equal to 1.

In some embodiments, the processor is used for reading the computer program in the memory and performing the following steps:
in a case that a third target object with the highest signal quality among the X measurement objects is different from a fourth target object with the highest signal quality indicated by the result derived from the target model, determining that the target model is inaccurate; otherwise, determining that the target model is accurate;
   or,
determining a quantity of measurement objects shared by the X measurement objects and Y measurement objects corresponding to the result derived from the target model, and in a case that the quantity of the shared measurement objects is less than a sixth threshold, determining that the target model is inaccurate; otherwise, determining that the target model is accurate;
wherein, Y is an integer greater than or equal to 1, and X and Y are equal or different.

In some embodiments, the processor is used for reading the computer program in the memory and performing the following steps:
in a case that Z consecutive measurement results do not match the result derived from the target model, determining that the target model is inaccurate; otherwise, determining that the target model is accurate;
   or,
in a case that a quantity of measurement objects for which the measurement result does not match the result derived from the target model is greater than a seventh threshold, determining that the target model is inaccurate; otherwise, determining that the target model is accurate;
wherein Z is an integer greater than or equal to 1.

In some embodiments, the processor is used for reading the computer program in the memory and performing the following steps:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; otherwise, determining that the target model is accurate;
wherein, the eighth threshold is an RSRP difference threshold corresponding to the second target beam.

In some embodiments, the result derived from the target model includes at least one of the following:
identification information of the measurement object;
beam RSRP;
time information corresponding to the measurement object; or
time information corresponding to the beam RSRP.

In some embodiments, the measurement object includes at least one of the following:
RSRP;
RSRQ;
RSSI;
SINR;
beam;
pilot signal; or
positioning result.

In some embodiments, the processor is used for reading the computer program in the memory and performing the following steps:
in a case that the monitoring result indicates that the target model is inaccurate, deactivating the target model, and/or switching to other model than the target model;
wherein, the other model includes one of the following:
   other AI model than the target model;
   other ML model than the target model;
   a non-AI model;
   a non-ML model.

The bus architecture may include any number of interconnected buses and bridges, specifically various circuits such as one or more processors represented by a processor and a memory represented by a memory are linked together. The bus architecture may also link together various other circuits e.g., peripherals, voltage regulators, and power management circuits, which are well known in the art and are therefore not further described herein. The bus interface provides an interface. The transceiver may be a plurality of components, namely, a transmitter and a receiver, providing a unit for communicating with various other devices on a transmission medium. The processor is responsible for managing the bus architecture and general processing, and the memory may store data used by the processor when performing operations.

The processor can be a central processing unit (CPU), an application specific integrated circuit (ASIC), a field programmable gate array (FPGA) or a complex programmable logic device (CPLD), and the processor can also adopt a multi-core architecture.

It should be noted here that the above-mentioned apparatus according to the embodiment of the present disclosure can implement all the method steps implemented by the above-mentioned method embodiment performed by the network side device, and can achieve the same technical effect. The parts and beneficial effects of this embodiment that are the same as the method embodiment will not be described in detail here.

Referring to Fig. 9, an embodiment of the present disclosure further provides a terminal, including: a memory, a transceiver, and a processor; wherein the memory is used for storing a computer program; the transceiver is used for receiving and sending data under the control of the processor; and the processor is used for reading the computer program in the memory and performing the following steps:
receiving measurement configuration information sent by a network side device;
measuring a measurement object according to the measurement configuration information to obtain a measurement result;
sending the measurement result to the network side device.

In some embodiments, the measurement configuration information includes at least one of the following:
identification information of a measurement object;
measurement time information of the measurement object;
measurement periodicity of the measurement object; or
measurement window for the measurement object.

In some embodiments, the processor is used for reading the computer program in the memory and performing at least one of the following steps:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain the RSRP of the beam.

In some embodiments, the measurement object includes at least one of the following:
RSRP;
RSRQ;
RSSI;
SINR;
beam;
pilot signal; or
positioning result.
wherein, the bus architecture may include any number of interconnected buses and bridges, specifically various circuits such as one or more processors represented by a processor and a memory represented by a memory are linked together. The bus architecture can also link together various other circuits e.g., peripherals, voltage regulators, and power management circuits, which are all well known in the art and are therefore not further described herein. The bus interface provides an interface. The transceiver can be a plurality of components, namely, a transmitter and a receiver, providing a unit for communicating with various other devices on a transmission medium. For different user equipment, the user interface can also be an interface that can connect required devices externally or internally, and the connected devices include but are not limited to keypads, displays, speakers, microphones, joysticks, etc.

The processor is responsible for managing the bus architecture and general processing, and the memory can store data used by the processor when performing operations.

In some embodiments, the processor may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to perform, as per the obtained executable instructions, any of the methods according to the embodiments of the present disclosure. The processor and the memory can also be arranged physically separately.

It should be noted here that the above-mentioned apparatus according to the embodiment of the present disclosure can implement all the method steps implemented by the above-mentioned method embodiment performed by the terminal, and can achieve the same technical effect. The parts and beneficial effects of this embodiment that are the same as the method embodiment will not be described in detail here.

In addition, a specific embodiment of the present disclosure also provides a processor-readable storage medium on which a computer program is stored, wherein when the program is executed by a processor, the steps of the model monitoring method described above are implemented and the same technical effect can be achieved. To avoid repetition, it will not be repeated here. wherein, the readable storage medium can be any available medium or data storage device that can be accessed by the processor, including but not limited to magnetic storage (e.g., floppy disk, hard disk, magnetic tape, magneto-optical disk (MO), etc.), optical storage (e.g., (Compact Disk, CD), Digital Versatile Disc (DVD), Blu-ray Disc (BD), High-Definition Versatile Disc (HVD), etc.), and semiconductor memory (e.g., Read-Only Memory (ROM), Erasable Programmable ROM (EPROM), Electrically Erasable Programmable Read-Only Memory (Electrically EPROM, EEPROM), non-volatile memory (NAND FLASH), solid-state drive (Solid State Disk, SSD)), etc.

It should be noted that the technical solution provided by the embodiments of the present disclosure can be applicable to a variety of systems, especially the 5th Generation mobile communication technology (5G) system. For example, an applicable system may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) system, a 5G new radio (NR) system, etc. These various systems include terminal devices and network side devices. The system may also include a core network part, e.g., the Evolved Packet System (EPS), 5G system (5GS), etc.

The terminal device involved in the embodiments according to the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, e.g., a mobile phone (or a "cellular" phone) and a computer with a mobile terminal device. For example, it may be a portable, pocket-sized, handheld, computer-built-in or vehicle-mounted mobile device that exchanges voice and/or data with a radio access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal, an access terminal, a user terminal, a user agent, and a user device, but is not limited in the embodiments of the present disclosure.

The network side device involved in the embodiments according to the present disclosure may be a base station, which may include multiple cells that provide services to the terminal. Depending on the specific application scenario, the base station may also be called an access point, or may be a device in the access network that communicates with the wireless terminal device through one or more sectors on the air interface, or other names. The network device may be used to convert received air frames into Internet Protocol (IP) packets or vice versa, and serve as a router between the wireless terminal device and the rest of the access network, wherein the rest of the access network may include an Internet Protocol (IP) communication network. The network side device may also coordinate the attribute management of the air interface. For example, the network side device involved in the embodiments of the present disclosure may be a network side device (Base Transceiver Station, BTS) in the Global System for Mobile communications (GSM) or Code Division Multiple Access (CDMA), or a network side device (NodeB) in Wide-band Code Division Multiple Access (WCDMA), or an evolved network device (evolutional Node B, eNB or e-NodeB) in the Long Term Evolution (LTE) system, a 5G base station (gNB) in the 5G network architecture (next generation system), or a Home evolved Node B (HeNB), a relay node, a home base station (femto), a pico base station (pico), etc., which is not limited in the embodiments of the present disclosure. In some network architectures, the network side devices may include a centralized unit (CU) node and a distributed unit (DU) node. The centralized unit and the distributed unit may also be arranged geographically separately.

The network side device and the terminal device can each use one or more antennas for multiple input multiple output (MIMO) transmission. MIMO transmission can be single user MIMO (SU-MIMO) or multi-user MIMO (MU-MIMO). According to the form and number of antenna combinations, MIMO transmission can be two-dimensional MIMO (2D-MIMO), three-dimensional MIMO (3D-MIMO), full-dimensional MIMO (FD-MIMO) or massive MIMO, or it can be diversity transmission, precoding transmission or beamforming transmission, etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are performed on the computer or other programmable device to produce a computer-implemented process, whereby the instructions executed on the computer or other programmable device provide steps for implementing the functions specified in one or more processes of the flowchart and/or one or more blocks of the block diagram.

It should be noted that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, a module can be a separately established processing element, or it can be integrated in a chip of the above-mentioned device. In addition, it can also be stored in the memory of the above-mentioned apparatus in the form of program code, and called and executed by a processing element of the above-mentioned apparatus. The implementation of other modules is similar. In addition, these modules can be fully or partially integrated together, or they can be implemented independently. The processing element described here can be an integrated circuit with signal processing capabilities. In the implementation process, each step of the above method or each module above can be completed by a hardware integrated logic circuit in the processor element or instructions in the form of software.

For example, each module, unit, sub-unit or sub-module may be one or more integrated circuits configured to implement the above method, e.g., one or more application specific integrated circuits (ASICs), or one or more microprocessors (digital signal processor, DSP), or one or more field programmable gate arrays (FPGAs), etc. For another example, when a module is implemented in the form of a processing element calling program codes, the processing element may be a general-purpose processor, such as a central processing unit (CPU) or other processor that can call program codes. For another example, these modules can be integrated together and implemented in the form of a system-on-a-chip (SOC).

Terms "first", "second" and the like in the specification and claims of this disclosure are adopted not to describe a specific sequence or order, but to distinguish similar objects. It should be understood that data used like this may be interchanged under a proper condition for implementation of the embodiments of the disclosure described here in a sequence apart from those shown or described here. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, for example, "A and/or B and/or C" indicates the inclusion of 7 situations including A alone, B alone, C alone, and both A and B exist, both B and C exist, both A and C exist, and A, B and C all exist. Similarly, the use of "at least one of A or B" in the specification and claims should be understood as "A alone, B alone, or both A and B exist".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A model monitoring method, comprising:
receiving, by a terminal, monitoring configuration information sent by a network side device;
monitoring, by the terminal, a target model according to the monitoring configuration information to obtain a monitoring result;
wherein, the target model comprises: an artificial intelligence (AI) model and/or a machine learning (ML) model.

2. The method according to claim 1, wherein the monitoring configuration information comprises at least one of the following:
monitoring mode;
mode for reporting the monitoring result;
monitoring periodicity;
monitoring result reporting periodicity;
time window for monitoring;
time window for reporting the monitoring result; or
parameter threshold.

3. The method according to claim 1, wherein the monitoring the target model according to the monitoring configuration information to obtain the monitoring result comprises:
monitoring the target model according to a monitoring mode indicated by the monitoring configuration information to determine an accuracy of the target model;
wherein the monitoring mode comprises one of the following:
periodic monitoring; and
monitoring within a first time window.

4. The method according to claim 3, wherein the monitoring the target model according to the monitoring mode indicated by the monitoring configuration information to determine the accuracy of the target model comprises:
measuring one or more measurement objects according to the monitoring mode indicated by the monitoring configuration information to obtain measurement results of all the measurement objects;
determining, according to the measurement results, K measurement objects whose signal quality is greater than a first threshold; and
comparing the K measurement objects with a measurement object corresponding to a result derived from the target model to determine the accuracy of the target model;
wherein K is an integer greater than or equal to 1.

5. The method according to claim 4, wherein the comparing the K measurement objects with the measurement object corresponding to the result derived from the target model to determine the accuracy of the target model comprises:
in a case that a first target object with the highest signal quality among the K measurement objects is different from a second target object with the highest signal quality indicated by the result derived from the target model, determining that the target model is inaccurate; in a case that the first target object with the highest signal quality among the K measurement objects is the same as the second target object with the highest signal quality indicated by the result derived from the target model, determining that the target model is accurate;
or,
determining a quantity of measurement objects shared by the K measurement objects and M measurement objects corresponding to the result derived from the target model, and in a case that the quantity of the shared measurement objects is less than a second threshold, determining that the target model is inaccurate; in a case that the quantity of the shared measurement objects is not less than the second threshold, determining that the target model is accurate;
wherein, M is an integer greater than or equal to 1, and M and K are equal or different.

6. The method according to claim 3, wherein the monitoring the target model according to the monitoring mode indicated by the monitoring configuration information to determine the accuracy of the target model comprises:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate; in a case that the N consecutive first measurement results of the first measurement results match the result derived from the target model, determining that the target model is accurate;
or,
in a case that a quantity of measurement objects for which the first measurement result does not match the result derived from the target model is greater than a third threshold, determining that the target model is inaccurate; in a case that the quantity of measurement objects for which the first measurement result does not match the result derived from the target model is not greater than the third threshold, determining that the target model is accurate;
wherein N is an integer greater than or equal to 1.

7. The method according to claim 1, wherein the monitoring the target model according to the monitoring configuration information to obtain the monitoring result comprises:
monitoring, according to the monitoring configuration information, a beam reference signal received power (RSRP) indicated by the result derived from the target model to determine an accuracy of the target model.

8. The method according to claim 7, wherein the monitoring, according to the monitoring configuration information, the beam RSRP indicated by the result derived from the target model to determine the accuracy of the target model comprises:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; in a case that the difference between the RSRP of the first target beam and the highest RSRP threshold is not greater than the fourth threshold, determining that the target model is accurate;
wherein, the fourth threshold is an RSRP difference threshold corresponding to the first target beam.

9. The method according to any one of claims 4 to 8, wherein the result derived from the target model comprises at least one of the following:
identification information of the measurement object;
beam RSRP;
time information corresponding to the measurement object; or
time information corresponding to the beam RSRP.

10. The method according to any one of claims 4 to 6, wherein the measurement object comprises at least one of the following:
RSRP;
reference signal received quality (RSRQ);
received signal strength indication (RSSI);
signal to interference plus noise ratio (SINR);
beam;
pilot signal; or
positioning result.

11. The method according to claim 1, wherein after obtaining the monitoring result, the method further comprises:
in a case that the monitoring result indicates that the target model is inaccurate, switching to other model than the target model;
wherein, the other model comprises one of the following:
other AI model than the target model;
other ML model than the target model;
a non-AI model;
a non-ML model.

12. The method according to claim 1 or 11, wherein after obtaining the monitoring result, the method further comprises:
receiving first indication information sent by the network side device;
deactivating the target model according to the first indication information; and/or switching to other model than the target model according to the first indication information.

13. The method according to claim 1, further comprising:
sending the monitoring result to the network side device.

14. The method according to claim 13, wherein the sending the monitoring result to the network side device comprises at least one of the following:
sending the monitoring result to the network side device according to a monitoring result reporting periodicity indicated by the monitoring configuration information;
sending the monitoring result to the network side device within a time window for reporting the monitoring result that is indicated by the monitoring configuration information; or
sending the monitoring result to the network side device in a case that the monitoring result indicates that the target model is inaccurate.

15. The method according to claim 1, wherein the monitoring result comprises at least one of the following:
an accuracy result of the target model;
a non-target model measurement result;
a difference between a beam RSRP and a highest RSRP threshold;
a quantity of measurement objects that do not meet an accuracy determination criterion; or
a ratio accounted for by measurement objects that do not meet the accuracy determination criterion.

16. A model monitoring method, comprising:
sending, by a network side device, monitoring configuration information for monitoring a target model to a terminal;
wherein, the target model comprises: an artificial intelligence (AI) model and/or a machine learning (ML) model.

17. The method according to claim 16, wherein the monitoring configuration information comprises at least one of the following:
monitoring mode;
mode for reporting the monitoring result;
monitoring periodicity;
monitoring result reporting periodicity;
time window for monitoring;
time window for reporting the monitoring result; or
parameter threshold.

18. The method according to claim 16, further comprising:
receiving a monitoring result sent by the terminal;
determining an accuracy of the target model according to the monitoring result.

19. The method according to claim 18, wherein the monitoring result comprises at least one of the following:
an accuracy result of the target model;
a non-target model measurement result;
a difference between a beam RSRP and a highest RSRP threshold;
a quantity of measurement objects that do not meet an accuracy determination criterion; or
a ratio accounted for by measurement objects that do not meet the accuracy determination criterion.

20. The method according to claim 18, wherein after receiving the monitoring result, the method further comprises:
in a case that the monitoring result indicates that the target model is inaccurate, sending first indication information to the terminal; wherein the first indication information is used for instructing the terminal to deactivate the target model and/or switch to other model than the target model.

21. A model monitoring method, comprising:
sending, by a network side device, measurement configuration information to a terminal;
receiving, by the network side device, a measurement result sent by the terminal;
monitoring, by the network side device, a target model according to the measurement result to obtain a monitoring result;
wherein, the target model comprises: an AI model and/or an ML model.

22. The method according to claim 21, wherein the measurement configuration information comprises at least one of the following:
identification information of a measurement object;
measurement time information of the measurement object;
measurement periodicity of the measurement object; or
measurement window for the measurement object.

23. The method according to claim 21, wherein the monitoring the target model according to the measurement result to obtain the monitoring result comprises:
determining, according to the measurement result, X measurement objects whose signal quality is greater than a fifth threshold;
comparing the X measurement objects with a measurement object corresponding to a result derived from the target model to determine an accuracy of the target model;
wherein X is an integer greater than or equal to 1.

24. The method according to claim 23, wherein the comparing the X measurement objects with the measurement object corresponding to the result derived from the target model to determine the accuracy of the target model comprises:
in a case that a third target object with the highest signal quality among the X measurement objects is different from a fourth target object with the highest signal quality indicated by the result derived from the target model, determining that the target model is inaccurate; in a case that the third target object with the highest signal quality among the X measurement objects is the same as the fourth target object with the highest signal quality indicated by the result derived from the target model, determining that the target model is accurate;
or,
determining a quantity of measurement objects shared by the X measurement objects and Y measurement objects corresponding to the result derived from the target model, and in a case that the quantity of the shared measurement objects is less than a sixth threshold, determining that the target model is inaccurate; in a case that the quantity of the shared measurement objects is not less than the sixth threshold, determining that the target model is accurate;
wherein, Y is an integer greater than or equal to 1, and X and Y are equal or different.

25. The method according to claim 21, wherein the monitoring the target model according to the measurement result to obtain the monitoring result comprises:
in a case that Z consecutive measurement results do not match the result derived from the target model, determining that the target model is inaccurate; in a case that the Z consecutive measurement results match the result derived from the target model, determining that the target model is accurate;
or,
in a case that a quantity of measurement objects for which the measurement result does not match the result derived from the target model is greater than a seventh threshold, determining that the target model is inaccurate; in a case that the quantity of measurement objects for which the measurement result does not match the result derived from the target model is not greater than the seventh threshold, determining that the target model is accurate;
wherein Z is an integer greater than or equal to 1.

26. The method according to claim 21, wherein the monitoring the target model according to the measurement result to obtain the monitoring result comprises:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; in a case that the difference between the RSRP of the second target beam and the highest RSRP threshold is not greater than the eighth threshold, determining that the target model is accurate;
wherein, the eighth threshold is an RSRP difference threshold corresponding to the second target beam.

27. The method according to any one of claims 23 to 26, wherein the result derived from the target model comprises at least one of the following:
identification information of the measurement object;
beam RSRP;
time information corresponding to the measurement object; or
time information corresponding to the beam RSRP.

28. The method according to any one of claims 22 to 25, wherein the measurement object comprises at least one of the following:
RSRP;
RSRQ;
RSSI;
SINR;
beam;
pilot signal; or
positioning result.

29. The method according to claim 21, wherein after obtaining the monitoring result, the method further comprises:
in a case that the monitoring result indicates that the target model is inaccurate, deactivating the target model, and/or switching to other model than the target model;
wherein, the other model comprises one of the following:
other AI model than the target model;
other ML model than the target model;
a non-AI model;
a non-ML model.

30. A model monitoring method, comprising:
receiving, by a terminal, measurement configuration information sent by a network side device;
measuring, by the terminal, a measurement object according to the measurement configuration information to obtain a measurement result; and
sending, by the terminal, the measurement result to the network side device.

31. The method according to claim 30, wherein the measurement configuration information comprises at least one of the following:
identification information of the measurement object;
measurement time information of the measurement object;
measurement periodicity of the measurement object; or
measurement window for the measurement object.

32. The method according to claim 30, wherein the measuring the measurement object according to the measurement configuration information to obtain the measurement result comprises at least one of the following:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain an RSRP of the beam.

33. The method according to claim 31 or 32, wherein the measurement object comprises at least one of the following:
RSRP;
RSRQ;
RSSI;
SINR;
beam;
pilot signal; or
positioning result.

34. A terminal, comprising: a memory, a transceiver, and a processor,
wherein the memory is used for storing a computer program, the transceiver is used for receiving and sending data under the control of the processor, and the processor is used for reading the computer program in the memory and performing the following steps:
receiving monitoring configuration information sent by a network side device;
monitoring a target model according to the monitoring configuration information to obtain a monitoring result;
wherein, the target model comprises: an artificial intelligence (AI) model and/or a machine learning (ML) model.

35. The terminal according to claim 34, wherein the processor is used for reading the computer program in the memory and performing the following step:
monitoring the target model according to a monitoring mode indicated by the monitoring configuration information to determine an accuracy of the target model;
wherein the monitoring mode comprises one of the following:
periodic monitoring; and
monitoring within a first time window.

36. The terminal according to claim 35, wherein the processor is used for reading the computer program in the memory and performing the following steps:
measuring one or more measurement objects according to the monitoring mode indicated by the monitoring configuration information to obtain measurement results of all the measurement objects;
determining, according to the measurement results, K measurement objects whose signal quality is greater than a first threshold;
comparing the K measurement objects with a measurement object corresponding to a result derived from the target model to determine the accuracy of the target model;
wherein K is an integer greater than or equal to 1.

37. The terminal according to claim 36, wherein the processor is used for reading the computer program in the memory and performing the following steps:
in a case that a first target object with the highest signal quality among the K measurement objects is different from a second target object with the highest signal quality indicated by the result derived from the target model, determining that the target model is inaccurate; in a case that the first target object with the highest signal quality among the K measurement objects is the same as the second target object with the highest signal quality indicated by the result derived from the target model, determining that the target model is accurate;
or,
determining a quantity of measurement objects shared by the K measurement objects and M measurement objects corresponding to the result derived from the target model, and in a case that the quantity of the shared measurement objects is less than a second threshold, determining that the target model is inaccurate; in a case that the quantity of the shared measurement objects is not less than the second threshold, determining that the target model is accurate;
wherein, M is an integer greater than or equal to 1, and M and K are equal or different.

38. The terminal according to claim 35, wherein the processor is used for reading the computer program in the memory and performing the following steps:
measuring one or more measurement objects according to the monitoring mode indicated by the monitoring configuration information to obtain first measurement results of all the measurement objects;
in a case that N consecutive first measurement results of the first measurement results do not match the result derived from the target model, determining that the target model is inaccurate; in a case that the N consecutive first measurement results of the first measurement results match the result derived from the target model, determining that the target model is accurate;
or,
in a case that a quantity of measurement objects for which the first measurement result does not match the result derived from the target model is greater than a third threshold, determining that the target model is inaccurate; in a case that the quantity of measurement objects for which the first measurement result does not match the result derived from the target model is not greater than the third threshold, determining that the target model is accurate;
wherein N is an integer greater than or equal to 1.

39. The terminal according to claim 34, wherein the processor is used for reading the computer program in the memory and performing the following step:
monitoring, according to the monitoring configuration information, a beam reference signal received power (RSRP) indicated by the result derived from the target model to determine an accuracy of the target model.

40. The terminal according to claim 39, wherein the processor is used for reading the computer program in the memory and performing the following steps:
determining, according to the monitoring configuration information, an RSRP of a first target beam configured by the network side device; wherein the first target beam is a beam derived from the target model;
in a case that a difference between the RSRP of the first target beam and a highest RSRP threshold is greater than a fourth threshold, determining that the target model is inaccurate; in a case that the difference between the RSRP of the first target beam and the highest RSRP threshold is not greater than the fourth threshold, determining that the target model is accurate;
wherein, the fourth threshold is an RSRP difference threshold corresponding to the first target beam.

41. The terminal according to claim 34, wherein the processor is used for reading the computer program in the memory and performing the following steps:
in a case that the monitoring result indicates that the target model is inaccurate, switching to other model than the target model;
wherein, the other model comprises one of the following:
other AI model than the target model;
other ML model than the target model;
a non-AI model;
a non-ML model.

42. The terminal according to claim 34 or 41, wherein the processor is used for reading the computer program in the memory and performing the following steps:
receiving first indication information sent by the network side device;
deactivating the target model according to the first indication information; and/or switching to other model than the target model according to the first indication information.

43. A network side device, comprising: a memory, a transceiver, and a processor, wherein the memory is used for storing a computer program, the transceiver is used for receiving and sending data under the control of the processor, and the processor is used for reading the computer program in the memory and performing the following step:
sending monitoring configuration information for monitoring a target model to a terminal;
wherein, the target model comprises: an AI model and/or an ML model.

44. The network side device according to claim 43, wherein the processor is used for reading the computer program in the memory and performing the following steps:
receiving a monitoring result sent by the terminal;
determining an accuracy of the target model according to the monitoring result.

45. The network side device according to claim 44, wherein the processor is used for reading the computer program in the memory and performing the following step:
in a case that the monitoring result indicates that the target model is inaccurate, sending first indication information to the terminal; wherein the first indication information is used for instructing the terminal to deactivate the target model and/or switch to other model than the target model.

46. A network side device, comprising: a memory, a transceiver, and a processor,
wherein the memory is used for storing a computer program, the transceiver is used for receiving and sending data under the control of the processor, and the processor is used for reading the computer program in the memory and performing the following steps:
sending measurement configuration information to a terminal;
receiving a measurement result sent by the terminal;
monitoring a target model according to the measurement result to obtain a monitoring result;
wherein, the target model comprises: an AI model and/or an ML model.

47. The network side device according to claim 46, wherein the processor is used for reading the computer program in the memory and performing the following steps:
determining, according to the measurement result, X measurement objects whose signal quality is greater than a fifth threshold;
comparing the X measurement objects with a measurement object corresponding to a result derived from the target model to determine an accuracy of the target model;
wherein X is an integer greater than or equal to 1.

48. The network side device according to claim 47, wherein the processor is used for reading the computer program in the memory and performing the following steps:
in a case that a third target object with the highest signal quality among the X measurement objects is different from a fourth target object with the highest signal quality indicated by the result derived from the target model, determining that the target model is inaccurate; in a case that the third target object with the highest signal quality among the X measurement objects is the same as the fourth target object with the highest signal quality indicated by the result derived from the target model, determining that the target model is accurate;
or,
determining a quantity of measurement objects shared by the X measurement objects and Y measurement objects corresponding to the result derived from the target model, and in a case that the quantity of the shared measurement objects is less than a sixth threshold, determining that the target model is inaccurate; in a case that the quantity of the shared measurement objects is not less than the sixth threshold, determining that the target model is accurate;
wherein, Y is an integer greater than or equal to 1, and X and Y are equal or different.

49. The network side device according to claim 46, wherein the processor is used for reading the computer program in the memory and performing the following steps:
in a case that Z consecutive measurement results do not match the result derived from the target model, determining that the target model is inaccurate; in a case that the Z consecutive measurement results match the result derived from the target model, determining that the target model is accurate;
or,
in a case that a quantity of measurement objects for which the measurement result does not match the result derived from the target model is greater than a seventh threshold, determining that the target model is inaccurate; in a case that the quantity of measurement objects for which the measurement result does not match the result derived from the target model is not greater than the seventh threshold, determining that the target model is accurate;
wherein Z is an integer greater than or equal to 1.

50. The network side device according to claim 46, wherein the processor is used for reading the computer program in the memory and performing the following steps:
determining an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determining that the target model is inaccurate; in a case that the difference between the RSRP of the second target beam and the highest RSRP threshold is not greater than the eighth threshold, determining that the target model is accurate;
wherein, the eighth threshold is an RSRP difference threshold corresponding to the second target beam.

51. The network side device according to claim 46, wherein the processor is used for reading the computer program in the memory and performing the following steps:
in a case that the monitoring result indicates that the target model is inaccurate, deactivating the target model, and/or switching to other model than the target model;
wherein, the other model comprises one of the following:
other AI model than the target model;
other ML model than the target model;
a non-AI model;
a non-ML model.

52. A terminal, comprising: a memory, a transceiver, and a processor,
wherein the memory is used for storing a computer program, the transceiver is used for receiving and sending data under the control of the processor, and the processor is used for reading the computer program in the memory and performing the following steps:
receiving measurement configuration information sent by a network side device;
measuring a measurement object according to the measurement configuration information to obtain a measurement result;
sending the measurement result to the network side device.

53. The terminal according to claim 52, wherein the processor is used for reading the computer program in the memory and performing at least one of the following steps:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain an RSRP of the beam.

54. A model monitoring apparatus, comprising:
a first receiving unit, configured to receive monitoring configuration information sent by a network side device;
a first monitoring unit, configured to monitor a target model according to the monitoring configuration information to obtain a monitoring result;
wherein, the target model comprises: an artificial intelligence (AI) model and/or a machine learning (ML) model.

55. The apparatus according to claim 54, wherein the first monitoring unit comprises:
a first determining subunit, configured to monitor the target model according to a monitoring mode indicated by the monitoring configuration information to determine an accuracy of the target model;
wherein the monitoring mode comprises one of the following:
periodic monitoring; and
monitoring within a first time window.

56. The apparatus according to claim 55, wherein the first determining subunit is specifically configured to:
measure one or more measurement objects according to the monitoring mode indicated by the monitoring configuration information to obtain measurement results of all the measurement objects;
determine, according to the measurement results, K measurement objects whose signal quality is greater than a first threshold;
compare the K measurement objects with a measurement object corresponding to a result derived from the target model to determine the accuracy of the target model;
wherein K is an integer greater than or equal to 1.

57. The apparatus according to claim 56, wherein the first determining subunit is specifically configured to:
in a case that a first target object with the highest signal quality among the K measurement objects is different from a second target object with the highest signal quality indicated by the result derived from the target model, determine that the target model is inaccurate; in a case that the first target object with the highest signal quality among the K measurement objects is the same as the second target object with the highest signal quality indicated by the result derived from the target model, determine that the target model is accurate;
or,
determine a quantity of measurement objects shared by the K measurement objects and M measurement objects corresponding to the result derived from the target model, and in a case that the quantity of the shared measurement objects is less than a second threshold, determine that the target model is inaccurate; in a case that the quantity of the shared measurement objects is not less than the second threshold, determine that the target model is accurate;
wherein, M is an integer greater than or equal to 1, and M and K are equal or different.

58. The apparatus according to claim 55, wherein the first determining subunit is specifically configured to:
measure one or more measurement objects according to the monitoring mode indicated by the monitoring configuration information to obtain first measurement results of all the measurement objects;
in a case that N consecutive first measurement results of the first measurement results do not match the result derived from the target model, determine that the target model is inaccurate; in a case that the N consecutive first measurement results of the first measurement results match the result derived from the target model, determine that the target model is accurate;
or,
in a case that a quantity of measurement objects for which the first measurement result does not match the result derived from the target model is greater than a third threshold, determine that the target model is inaccurate; in a case that the quantity of measurement objects for which the first measurement result does not match the result derived from the target model is not greater than the third threshold, determine that the target model is accurate;
wherein N is an integer greater than or equal to 1.

59. The apparatus according to claim 54, wherein the first monitoring unit comprises:
a second determining subunit, configured to monitor, according to the monitoring configuration information, a beam reference signal received power (RSRP) indicated by the result derived from the target model to determine an accuracy of the target model.

60. The apparatus according to claim 59, wherein the second determining subunit is specifically configured to:
determine, according to the monitoring configuration information, an RSRP of a first target beam configured by the network side device, wherein the first target beam is a beam derived from the target model;
in a case that a difference between the RSRP of the first target beam and a highest RSRP threshold is greater than a fourth threshold, determine that the target model is inaccurate; in a case that the difference between the RSRP of the first target beam and the highest RSRP threshold is not greater than the fourth threshold, determine that the target model is accurate;
wherein, the fourth threshold is an RSRP difference threshold corresponding to the first target beam.

61. The apparatus according to claim 54, further comprising:
a first processing unit, configured to, in a case that the monitoring result indicates that the target model is inaccurate, switch to other model than the target model;
wherein, the other model comprises one of the following:
other AI model than the target model;
other ML model than the target model;
a non-AI model;
a non-ML model.

62. The apparatus according to claim 54 or 61, further comprising:
a fourth receiving unit, configured to receive first indication information sent by the network side device;
a second processing unit, configured to deactivate the target model according to the first indication information, and/or switch to other model than the target model according to the first indication information.

63. A model monitoring apparatus, comprising:
a first sending unit, configured to send monitoring configuration information for monitoring a target model to a terminal;
wherein, the target model comprises: an artificial intelligence (AI) model and/or a machine learning (ML) model.

64. The apparatus according to claim 63, further comprising:
a fifth receiving unit, configured to receive a monitoring result sent by a terminal;
a third processing unit, configured to determine an accuracy of the target model according to the monitoring result.

65. The apparatus according to claim 64, further comprising:
a fifth sending unit, configured to, in a case that the monitoring result indicates that the target model is inaccurate, send first indication information to the terminal; wherein the first indication information is used for instructing the terminal to deactivate the target model and/or switch to other model than the target model.

66. A model monitoring apparatus, comprising:
a second sending unit, configured to send measurement configuration information to a terminal;
a second receiving unit, configured to receive a measurement result sent by the terminal;
a second monitoring unit, configured to monitor a target model according to the measurement result to obtain a monitoring result;
wherein, the target model comprises: an AI model and/or an ML model.

67. The apparatus according to claim 66, wherein the second monitoring unit is specifically configured to:
determine, according to the measurement result, X measurement objects whose signal quality is greater than a fifth threshold;
compare the X measurement objects with a measurement object corresponding to a result derived from the target model to determine an accuracy of the target model;
wherein X is an integer greater than or equal to 1.

68. The apparatus according to claim 67, wherein the second monitoring unit is specifically configured to:
in a case that a third target object with the highest signal quality among the X measurement objects is different from a fourth target object with the highest signal quality indicated by the result derived from the target model, determine that the target model is inaccurate; in a case that the third target object with the highest signal quality among the X measurement objects is the same as the fourth target object with the highest signal quality indicated by the result derived from the target model, determine that the target model is accurate;
or,
determine a quantity of measurement objects shared by the X measurement objects and Y measurement objects corresponding to the result derived from the target model, and in a case that the quantity of the shared measurement objects is less than a sixth threshold, determine that the target model is inaccurate; in a case that the quantity of the shared measurement objects is not less than the sixth threshold, determine that the target model is accurate;
wherein, Y is an integer greater than or equal to 1, and X and Y are equal or different.

69. The apparatus according to claim 66, wherein the second monitoring unit is specifically configured to:
in a case that Z consecutive measurement results do not match the result derived from the target model, determine that the target model is inaccurate; in a case that the Z consecutive measurement results match the result derived from the target model, determine that the target model is accurate;
or,
in a case that a quantity of measurement objects for which the measurement result does not match the result derived from the target model is greater than a seventh threshold, determine that the target model is inaccurate; in a case that the quantity of measurement objects for which the measurement result does not match the result derived from the target model is not greater than the seventh threshold, determine that the target model is accurate;
wherein Z is an integer greater than or equal to 1.

70. The apparatus according to claim 66, wherein the second monitoring unit is specifically configured to:
determine an RSRP of a second target beam according to the measurement result, wherein the second target beam is a beam with the lowest load or a beam with the best signal quality in the result derived from the target model;
in a case that a difference between the RSRP of the second target beam and a highest RSRP threshold is greater than an eighth threshold, determine that the target model is inaccurate; in a case that the difference between the RSRP of the second target beam and the highest RSRP threshold is not greater than the eighth threshold, determine that the target model is accurate;
wherein, the eighth threshold is an RSRP difference threshold corresponding to the second target beam.

71. The apparatus according to claim 66, further comprising:
a fourth processing unit, configured to, in a case that the monitoring result indicates that the target model is inaccurate, deactivate the target model, and/or switch to other model than the target model;
wherein, the other model comprises one of the following:
other AI model than the target model;
other ML model than the target model;
a non-AI model;
a non-ML model.

72. A model monitoring apparatus, comprising:
a third receiving unit, configured to receive measurement configuration information sent by a network side device;
a first measuring unit, configured to measure a measurement object according to the measurement configuration information to obtain a measurement result;
a third sending unit, configured to send the measurement result to the network side device.

73. The apparatus according to claim 72, wherein the first measuring unit is specifically configured to perform at least one of the following:
measuring the measurement object within a measurement periodicity indicated by the measurement configuration information to obtain measurement results of all the measurement objects within the measurement periodicity;
measuring the measurement object within a measurement window indicated by the measurement configuration information to obtain measurement results of all the measurement objects within the measurement window; or
measuring a beam indicated by the measurement configuration information to obtain an RSRP of the beam.

74. A processor-readable storage medium having a computer program stored thereon, wherein when the computer program is executed by a processor, the steps of the model monitoring method according to any one of claims 1 to 33 are implemented.
